# EUROPEAN PATENT APPLICATION

(11) **EP 1 857 175 A2**
(43) Date of publication of application: **21.11.2007**
(21) Application number: 07108558.3
(22) Date of filing: 21.05.2007
(51) Int. Cl.: B01J 21/04, B01J 37/10, C01F 7/44, C07D 301/08, B01J 3/04, B01J 21/06, B01J 23/02, B01J 35/02

(54) **Alpha Aluminia supports for ethylene oxide catalysts and method of preparing thereof**

(30) Priority: 19.05.2006 US 801727 P; 17.05.2007 US 750188
(71) Applicant: Sawyer Technical Materials LLC, Eastlake OH 44139 (US)
(72) Inventor: Suchanek, Wojciech L., Solon, MI 44139 (US); Garcés, Juan M., Midland, MI 48640 (US)
(74) Representative: Hyltner, Jan-Olof

(57) **Abstract**

A process of making a crystalline powder and the powder. The process includes providing at least a precursor material; hydrothermal synthesis to create a predetermined amount of boehmite as an intermediate product from the at least precursor material; hydrothermal synthesis to convert at least a portion of the boehmite to alpha alumina, wherein any remaining, un-converted boehmite is attached to alpha alumina. The process may be part of a process to make and extrudate and the extrudate. The composition and extrudate may include alpha alumina crystals with surface adhesions of boehmite. An apparatus for hydrothermal synthesis of high purity alpha alumina powder, the apparatus including an autoclave with titanium liners, a pressure relief system and a heat exchanger.

## Description

### BACKGROUND OF INVENTION

### Discussion Concerning Alpha Alumina (AA) Supports for Ethylene Oxide (EO) Catalysts

There are numerous examples of the use of alpha alumina (hereinafter "AA") as a key component of catalyst and catalyst supports or carriers used for the production of ethylene oxide (hereinafter "EO") by selective oxidation of ethylene with oxygen. Such examples can be found in the following patents: US 6846774; US 6831037; US 5380697; US 5145824; US 4419276; US 4445392; US 4575494; US 4908343; US4916243; US 5102848 and some of the references cited therein.

Ideally, EO supports comprise a high percentage of AA. See for example the following patents: EP 0900128 B1; US 6,846,774 B2; US 5,380,697; and Applied Catalysis A: 244 (2003) 59-70, A. Ayame et al. The AA should be a high purity, e.g., 99.9+%, material in terms of chemical purity and crystallographic purity. The only crystal phase should be AA, also known as corundum.

AA supports for EO catalysts should have preferably high porosity and high crush strength. These two properties are not always easy to achieve in the same material. A careful experimental design is needed to achieve the right balance of high porosity and crush strength, when producing these supports. It is also important to have supports with high purity and a high percentage of AA. This makes the support design and production even more demanding. See Applied Catalysis A: 244 (2003) 59-70, A. Ayame et al.

Binders are usually incorporated in the experimental design used to make EO AA catalyst supports in order to improve the mechanical strength of the supports. See the following patents: US 6846774; US 6831037; US 5380697; US5145824; US 4419276; US 4445392; US 4575494; US 4908343; US4916243; US 5102848 and the references cited therein. Binders include oxides of Si, Al, Mg, Ti, Fe, Zr, etc. and other materials such as sulfates, borates, carbonates, etc. However, binders are selected not only to improve mechanical strength but also to avoid deleterious impact on the catalytic performance of the EO catalysts that may reduce the EO selectivity or the stability of the catalyst under EO production conditions. Ideally the selection and amount of binders should aim at improving the mechanical strength of the catalyst particles and also improving the EO selectivity and the stability of the catalyst. It would be beneficial to have binders, such as boehmite, which can be converted into AA during fabrication of the supports, and other oxides such as Cs oxides, hydroxide, carbonate, and aluminate, incorporated during the formation of the support precursors in combination with water and lubricants. These are used to enhance the mechanical strength of the supports, see US 4,575,494, and/or improve the performance of EO catalysts, see US 4,897,376, by control of the surface acidity of the supports, see Applied Catalysis A: General 244 (2003) 59-70.

It would be advantageous to have an AA precursor, to make EO catalyst supports, comprising desired amounts of boehmite, for example with the same trace elemental composition of the AA crystals, sufficient to bind the AA particles, and control pore size, pore size distribution and porosity of the supports, by calcination of the extrudate precursor under selected conditions. It would be even more desirable to have the boehmite particles uniformly distributed over the surface of the AA after the synthesis, such that both the AA and the boehmite would be produced in the same reactor. This would be superior to the currently used mechanical mixing of AA and boehmite powders that can result in lower homogeneity and improper bonding between AA and boehmite particles. Finally, it would be advantageous to have the desired particle size of AA and boehmite, and the desired AA/boehmite mass ratios to achieve superior mechanical properties in the supports obtained after calcination of the extrudates made using the AA and boehmite product from the hydrothermal synthesis. These advantages can be achieved by the procedures and materials used in this invention, which include the hydrothermal synthesis of AA and AA/boehmite mixtures.

Typically AA based EO catalyst supports are made by incorporating AA crystals, made by calcination of alumina hydrate precursors, into an extrudate "mixture" with binders (SiO₂, magnesium silicate, calcium silicate, ZrO₂, TiO₂, boehmite (AlOOH), boric acid, etc.) used as bonding material between the AA crystals to enhance the mechanical strength of the aggregates and to reduce the sintering time needed to achieve such strength. The "mixture" may contain other components used as lubricants (Vaseline) to facilitate operation of the extruder equipment, water (used as a space filler to create porosity and also as an aid to make the extrudates more plastic), and burnout materials. For more details see US 5,145,824, Section "The Carrier"; see also US 6,831,037 B2, Sections 3-6. However, the binders, such as SiO₂, silicates, ZrO₂, TiO₂, etc. may introduce undesired active sites in the AA supports, for example acid sites. Thus, it would be ideal to prepare supports without binders, which introduce elements different than aluminum and oxygen.

The extrudates are treated at high temperatures to eliminate surface acidity from the AA crystal surfaces and to enhance the mechanical properties, control porosity, pore size, and pore size distribution. The materials of this invention provide a superior mixture to achieve such goals at lower temperatures than normally used with other sources of AA and other extruding mixtures.

### Discussion Concerning Hydrothermal Technique for Synthesis of Ceramic Powders

Hydrothermal synthesis is a process that utilizes single or heterogeneous phase reactions in aqueous media at elevated temperature (*T*>25°C) and pressure (*P*>100 kPa) to crystallize ceramic materials directly from solution. See K. Byrappa and M. Yoshimura, Handbook of Hydrothermal Technology (Noyes, 2001).

From the standpoint of ceramic powder production, hydrothermal synthesis offers many advantages over conventional and non-conventional powder synthetic methods. There are far fewer time- and energy-consuming processing steps since high-temperature calcination, mixing, and milling steps are either not necessary or significantly reduced. Moreover, the ability to precipitate already crystallized powders directly from solution regulates the rate and uniformity of nucleation, growth and aging, which results in improved control of size and morphology of crystallites and significantly reduced aggregation levels, which is not possible with many other synthesis processes. See R. E. Riman, et al, Ann. Chim. Sci. Mat. 27 (2002) 15-36; W. L. Suchanek, et al, pp. 717-744 in Aqueous Systems at Elevated Temperatures and Pressures: Physical Chemistry in Water, Steam, and Hydrothermal Solutions (Elsevier, 2004) and references cited therein.

The elimination/reduction of aggregates combined with narrow particle size distributions in the starting powders leads to optimized and reproducible properties of ceramics because of better microstructure control. See R. A. Ring, Fundamentals of Ceramic Powder Processing and Synthesis (Academic Press, 1996)). The synthesized crystallites can be in a variety of forms, such as equiaxed (for example cubes, spherical, diamond, bipyramid), elongated (fibers, whiskers, nanorods, nanotubes), plates, nanoribbons, nanobelts, etc. See for instance J. H. Adair and E. Suvaci, Current Opinion in Colloid & Interface Science 5 (2000) 160-167.

Another important advantage of the hydrothermal synthesis is that the purity of hydrothermally synthesized powders significantly exceeds purity of the starting materials. It is because the hydrothermal crystallization is a self-purifying process, during which the growing crystals/crystallites tend to reject impurities present in the growth environment. The impurities are subsequently removed from the system with together the crystallizing solution, which does not take place during other synthesis routes, for example high-temperature calcination.

Materials synthesized under hydrothermal conditions often exhibit differences in point defects when compared to materials prepared by high temperature synthesis methods. For instance, tungstates of Ca, Ba, and Sr synthesized at room temperature by a hydrothermal-electrochemical method do not contain Schottky defects usually present in similar materials prepared at high temperatures. See W. S. Cho, et al., Appl. Phys. Lett. 66 (1995) 1027-1029), which results in improved luminescent properties. Other types of defects, such as hydroxyl ions substituted for oxygen ions in barium titanate generate barium ion vacancies, which are believed to degrade the dielectric properties. See D. Hennings and S. Schreinmacher, J. European Ceram. Soc. 9 (1992) 41-46. Presence of residual water in hydrothermally synthesized hydroxyapatite is one of the reasons of poor control of its calcium stoichiometry. See W. Suchanek et al., J. Mater. Res. 10 (1995) 521-529. In commercially grown α-quartz, water-related lattice defects are among the most common impurities and their concentration determines properties of α-quartz single crystals, such as the electrical quality factor Q and optical absorption. See G. Johnson and J. Foise, pp. 365-375 in Encyclopedia of Applied Physics, Vol. 15 (VCH, 1996).

Very high chemical purity combined with unique powder morphology and defect structure of AA powders and AA/boehmite mixtures synthesized hydrothermally should result in unique features of EO catalysts AA supports made of such powders.

### Discussion Concerning Hydrothermal Synthesis of AA Powders

AA powders can be synthesized by several well-established major synthesis methods, such as the well-known Bayer process and its modifications, calcination of gel-based Al(OH)₃ in air or in controlled atmosphere, high-temperature decomposition of aluminum-containing salts, and chemical vapor deposition (CVD). See L. K. Hudson, et al., chapter "Aluminum Oxide" in Ullmann's Encyclopedia of Industrial Chemistry; Vol. A1 (VCH, 1985). All of these methods use high temperatures, usually above 1,100°C in order to crystallize the AA phase. In most cases, the high synthesis temperatures lead to the formation of strong aggregates in the AA powders, which subsequently have to be excessively milled resulting in low control of particle morphology. However, exception to this rule is the high-temperature calcination at 1,100°C in controlled atmosphere of hydrogen halide, which yields very well defined AA crystals with low level of aggregation. See US 6,159,441. With respect to chemical purity, the Bayer process produces lower-grades of AA, whereas calcinations of gels, salt decomposition or CVD can produce ultra-high purity AA.

Hydrothermal synthesis of AA is a low-temperature alternative to the methods described above and can produce high-purity AA powders with precisely controlled size and morphology and low level of aggregation, as will be shown in this invention.

The hydrothermal synthesis of AA has been well established in the growth of large single crystals of corundum. See K. Byrappa and M. Yoshimura, *Handbook of Hydrothermal Technology* (Noyes, 2001) and references therein. The hydrothermal synthesis of AA powders has been also described in the literature, however not as extensively as one could expect for such widely used materials as AA powders. The classical hydrothermal synthesis of AA powders is quite well established and has been described in several papers. See for example S. Somiya, et al., Materials Science Research, Vol. 17 (1982) 155-166; H. Toraya et al., Advances in Ceramics, Vol. 12 (1983) 806-815; T. S, Kannan, et al. J. Mater. Sci. Lett., 16 (1997) 830-834. This classical hydrothermal synthesis of AA powders involves water oxidation of aluminum metal at relatively high-temperatures well over 400°C up to 700°C and high pressures up to 120 MPa, and does not produce powders with precisely controlled morphology.

Known studies on low-temperature hydrothermal synthesis of AA powders are quite limited in numbers. Nevertheless, there exist a couple of reports on hydrothermal synthesis of nanosized AA powders at 190-200°C from a mixture of precipitated Al-hydroxide sols or gels and a small fraction of AA seeds. See P. K. Sharma, et al., J. Am. Ceram. Soc., 81 (1998) 2732-2734; J. Yang et al., J. Am. Ceram. Soc., Vol. 86 (2003) 2055-2058. However, the presented powder characterization is sometimes inconsistent and does not always the desired result as presented by the author.

One of the best and most widely used laboratory-scale approaches to obtain AA particles with precisely controlled size and morphology at low temperatures has been the glycothermal synthesis, which is one of the solvothermal techniques. The glycothermal route allows synthesizing AA powders at 300°C with sizes ranging from 50 nm to a few microns, encompassing a broad range of morphologies, such as plates, a variety of polyhedra with different aspect ratios, etc. See M. Inoue, et al., J. Am. Ceram. Soc., 72 (1989) 352-353; S. B. Cho, et al., J. Am. Ceram. Soc., Vol. 79, No. 1, 88-96 (1996); N. S. Bell, et al., J. Am. Ceram. Soc., Vol 81, No 6, 1411-1420 (1998); N. S. Bell and J. H. Adair, J. Cryst. Growth, Vol. 203, No. 1-2, 213-226 (1999); W. J. Li, et al., J. Cryst. Growth, Vol 208, No 1-4, 546-554 (2000).

Hydrothermal synthesis of AA from aluminum tri-hydroxides or oxide-hydroxides has been reported in several patents. See US 6,197,277; US Patent Application No. 20010043910; Russian Patent No. RU 2092438 C1; Patent Application No. 2004054930/WO-A1, S. Ono, et al., J. Ceram. Assoc. Japan, Vol. 76 (1968) 207-218; M. N. Danchevskaya, et al., High Pressure Research, Vol. 20 (2001) 229-239; O. G. P. Panasyuk, et al., J. Phys.: Condens. Matter, Vol. 16 (2004) S1215-S1221; M. N. Danchevskaya, et al., J. Phys.: Condens. Matter, Vol. 16 (2004) S1187-S1196; V. Al'myasheva, et al., Inorg. Mater., Vol. 41 (2005) 460-467. These AA powders were synthesized at 380-500°C at pressures of 30-1,000 atm. and exhibited a variety of sizes (from nanosized to 100 µm) and morphologies (plates, equiaxed, bi-piramides, etc.). These AA powders are most closely related to the AA powders synthesized in the present invention.

Among materials being discussed in the present invention, pure AIOOH boehmite in a variety of morphologies and sizes is being widely synthesized under hydrothermal conditions from various precursors at temperatures between 80 and 350°C (a few hours - several days), as described in many works. See R. Bursasco, et al., Mater. Res. Bull., Vol. 19 (1984) 1489-1496; P. A. Buining, et al., J. Am. Ceram. Soc., Vol. 74 (1991) 1303-1307; T. Adschiri, et al., J. Am. Ceram. Soc., Vol. 75 (1992) 2615-2618; K. M. Khalil, J. Catal., Vol. 178 (1998) 198-206; S. Music, et al., Mater. Lett., Vol. 40 (1999) 269-274; T. Tsuchida, J. Eur. Ceram. Soc., Vol. 20 (2000) 1759-1764; D. Mishra et al., Mater. Lett., Vol. 42 (2000) 38-45; X. Bokhimi, et al., J. Solid State Chem., Vol. 166 (2002) 182-190; C. Kaya, et al., Micropor. Mesopor. Mater., Vol. 54 (2002) 37-49; D. Mishra, et al., Mater. Lett., Vol. 53 (2002) 133-137; K. Okada et al., J. Colloid Interf. Sci., Vol. 253 (2002) 308-314; S. Sugiyama, et al., J. Chem. Eng. Jpn., Vol. 36 (2003) 1095-1100.

It would be advantageous to use the hydrothermal synthesis to prepare AA powders or AA/boehmite mixtures, which could be then used for EO catalysts supports. The hydrothermal synthesis offers here several advantages, such as high chemical purity of AA, precise control of AA size and morphology, low level of aggregation, as well as possibly different defect structure of AA due to unique features of process described in the present invention.

### BRIEF SUMMARY OF THE INVENTION

In accordance with one aspect, the present invention provides a process of making a crystalline powder, the process including: providing at least a precursor material; hydrothermal synthesis to create a predetermined amount of boehmite as a intermediate product from the at least precursor material; hydrothermal synthesis to convert at least a portion of the boehmite to alpha alumina, wherein any remaining, un-converted boehmite is attached to alpha alumina.

In accordance with another aspect, the present invention provides a crystalline powder made by a process of making a crystalline powder, the process including: providing at least a precursor material; hydrothermal synthesis to create a predetermined amount of boehmite as a intermediate product from the at least precursor material; hydrothermal synthesis to convert at least a portion of the boehmite to alpha alumina, wherein any remaining, un-converted boehmite is attached to alpha alumina.

In accordance with another aspect, the present invention provides an extrudate made with a crystalline powder made by a process of making a crystalline powder, the process including: providing at least a precursor material; hydrothermal synthesis to create a predetermined amount of boehmite as a intermediate product from the at least precursor material; hydrothermal synthesis to convert at least a portion of the boehmite to alpha alumina, wherein any remaining, un-converted boehmite is attached to alpha alumina.

In accordance with another aspect, the present invention provides a process of making an extrudate that includes a process of making a crystalline powder, the powder process including: providing at least a precursor material; hydrothermal synthesis to create a predetermined amount of boehmite as a intermediate product from the at least precursor material; hydrothermal synthesis to convert at least a portion of the boehmite to alpha alumina, wherein any remaining, un-converted boehmite is attached to alpha alumina.

In accordance with another aspect, the present invention provides a composition including alpha alumina crystals with surface adhesions of boehmite.

In accordance with another aspect, the present invention provides an extrudate including alpha alumina crystals with surface adhesions of boehmite.

In accordance with another aspect, the present invention provides an apparatus for hydrothermal synthesis of high purity alpha alumina powder, the apparatus including an autoclave with titanium liners, a pressure relief system and a heat exchanger.

### BRIEF DESCRIPTION OF THE DRAWINGS

The following presents a simplified summary of the invention in order to provide a basic understanding of some aspects of the invention. This summary is not an extensive overview of the invention. It is intended to neither identify key nor critical elements of the invention nor delineate the scope of the invention. Its sole purpose is to present some concepts of the invention in a simplified form as a prelude to the more detailed description that is presented later.

Figure 1 is a schematic diagram of an example autoclave assembly used in hydrothermal synthesis of AA powders.

Figures 2A and 2B are graphics showing heating ramps of the hydrothermal synthesis of alpha alumina (hereinafter "AA"), with temperatures, durations, pressures, and chemical reactions given, during (a) Dual-ramp heat treatment to synthesize 1-40 µm powders, and (b) single-ramp heat treatment to obtain 100-250 nm powders.

Figures 3A and 3B are photograph images of typical morphologies of the AA powders synthesized under hydrothermal conditions: (a) as-synthesized powders with median particle size of 10 µm; and (b) as-synthesized powders with median particle size of 100 nm.

Figure 4 is a graph of typical particle size distributions of selected synthesized AA powders. Median (D₅₀) values of particle sizes are marked.

Figure 5 is a SEM photograph revealing a single grain of AA with unreacted 2-3 µm boehmite plate-shaped particles attached to the surface of the AA crystal, in which the powder was synthesized hydrothermally at maximum temperature for a relatively short time, so the conversion to AA was not yet complete.

Figure 6A. XRD is a graphic that shows patterns of hydrothermally synthesized composite AA/boehmite powders, in which a maximum temperature of Ramp 2 was 400°C (20 hours) at 2,000 psi pressure and the contents of boehmite in the AA/boehmite powders as well as contents of AA seeds in the precursors used to make these mixed powders are marked.

Figure 6B: XRD is a graphic that shows patterns of hydrothermally synthesized composite AA/boehmite powders, in which a maximum temperature of Ramp 2 was 400°C (14 hours) at 2,000 psi pressure and the contents of boehmite in the AA/boehmite powders as well as contents of AA seeds in the precursors used to make these mixed powders are marked.

Figures 7A and 7B are graphics that show Pore size distributions of AA granules measured by Hg intrusion porosimetry for: (a) granule containing 3 µm AA particles after heat treatment in air at 1,400°C (4 h); and (b) green granule consisting of 10 µm AA particles.

Figure 8A is a graphical plot of pore size distribution.

Figures 8B and 8C are photographic images of microstructure of porous AA supports made from 3 µm powder compacted without additives at 5 MPa and subsequently sintered at 1400°C (5h): porosity = 37.2%, BET surface area = 0.80 m²/g, Total pore volume = 0.264 cm³/g, compressive strength = 57.8 MPa at two different magnifications.

Figures 9A-9F are graphical plots showing typical pore size distributions of high-strength, high-porosity AA supports made from hydrothermally synthesized 3 µm unmilled AA or AA/boehmite powders, formed by extruding and sintered in air at 1450°C (8h) for (a) V-11, (b) V-15, (c) V-19, (d) V-18. (e) V-10, and (f) V-21, each sintered at 1400°C for 24h.

Figures 10A-10F are photographic images of microstructures of high-strength, high-porosity AA supports made from hydrothermally synthesized 3 µm unmilled AA or AA/boehmite powders, formed by extruding and sintered in air at 1,450°C (8 hrs), with Figures 10A-10C being V-11, synthesized from AA powder and Figures 10D-10F being V-19, synthesized from AA/boehmite composite powder.

Figures 11A and 11B are SEM photographic images of AA supports synthesized in the presence (Figure 11A) and absence (Figure 11B of HNO₃ used to disperse the nanosized boehmite particles, with good dispersion of the small boehmite-derived particles filling spaces between large AA grains ((Figure 11A) and presence of large, spherical agglomerates of undispersed boehmite ((Figure 11A).

Figures 12A-12F are SEM photographic images of reinforced AA supports from hydrothermally synthesized high-purity AA powders obtained by extruding followed by sintering in air at 1,400°C (12 hrs), in which the following reinforcements were used: (a)-(b) 10% AA platelets 20 µm in diameter, (c)-(d) 10% AA platelets 35 µm in diameter, and (e)-(f) 10% AA fibers (10 µm diameter, <<1/8" long).

Figures 13A-13D are graphical plots of pore size distributions of AA porous supports made ofNa, Si-rich AA powders, sintered in air at 1,650°C (2 h), as measured by Hg intrusion porosimetry, with the stated characteristics of the starting powders, conditions of forming green compacts, as well as porosity data of the sintered bodies are provided for each plot.

Figures 14A-14C are SEM photographic images revealing microstructures of selected AA porous supports made from the Na, Si-rich AA powders by sintering in air at 1,650°C (2 h). Characteristics of the starting powders, conditions of forming green compacts, as well as porosity data of the sintered bodies being provided on each photo and at the same magnification.

Figure 15 is a SEM photographic image of hydrothermally synthesized 40 µm AA powder (as-synthesized).

Figures 16A and 16B are SEM photographic images of hydrothermally synthesized 25 µm AA powders: as-synthesized (Figure 16A) and milled (Figure 16B), with magnification being the same and indicated by the scale-bars.

Figure 17 is a SEM photographic image of hydrothermal synthesized 10 µm AA powder (as-synthesized).

Figure 18 is a SEM photographic image of hydrothermal synthesized 6 µm AA powder (as-synthesized).

Figures 19A-19C are SEM photographic images of hydrothermally prepared 160 nm AA powders: as synthesized (Figure 19A), wet-milled in a horizontal mill (Figure 19B) and dry-milled in attritor mill (Figure 19C).

Figures 20A and 10B are SEM photographic images of hydrothermal synthesized 100 nm µm AA powder, as-synthesized powders only (unmilled) and with magnification indicated by the scale-bars.

Figures 21A and 21B are SEM photographic images ofhydrothermally synthesized composite AA/boehmite powders at different magnifications, as-synthesized powders only (unmilled).

Figures 22A-22D are SEM photographic images of hydrothermally synthesized composite AA/boehmite mixed powders containing: (a) 0 wt% of boehmite (pure AA), (b) 8 wt% of boehmite, (c) 15 wt% of boehmite, and (d) 30 wt% of boehmite. As-synthesized powders only (unmilled), and magnifications being the same.

Figures 23A and 23B are SEM photographic images ofhydrothermally synthesized manganese-doped 10 µm AA powders: as-synthesized (Figure 23A) and milled (Figure 23B), with the same magnification.

Figures 24A and 24B are SEM photographic images ofhydrothermally synthesized chromium-doped 3 µm AA powder, at different magnifications, as-synthesized powders only (unmilled) and revealing very high powder uniformity and narrow particle size distribution.

Figures 25A and 25B are SEM photographic images ofhydrothermally synthesized manganese-doped 250 nm AA powder, at different magnifications, as-synthesized powders only (unmilled) and revealing very high powder uniformity and narrow particle size distribution.

### DESCRIPTION OF EXAMPLE EMBODIMENTS

### Description of Starting Materials

The selection of appropriate precursors, seeds, dopants and chemical additives for the hydrothermal synthesis of alpha alumina (hereinafter "AA") powders is part of the process to obtain product powders with desired properties, such as chemical purity, crystallite morphology, crystal size, aggregation level, and particle size distribution.

Aluminum tri-hydroxide (trihydrate) powders (gibbsite or hydrargillite, chemical formula Al(OH)₃) or aluminum oxide-hydroxide powders (boehmite, chemical formula AIOOH) can be used as precursor powders in hydrothermal synthesis of AA powders. The best results, which provided the highest chemical purity and most consistent and reproducible morphological features of the AA powders, were obtained using the following precursors: Precursor Type A white alumina trihydrate and Precursor Type B white alumina trihydrate, and also Precursor Type C. Available typical properties of the precursor powders are summarized in Table I. Precursor Type A and Precursor Type B exhibited lower and more consistent levels of chemical impurities than Precursor Type C, thus AA powders obtained from Precursor Type A and Precursor Type B had higher purity and morphological reproducibility, and are desirable for this invention. Other aluminum tri-hydroxides or oxide-hydroxides, such as bayerite (Al(OH)₃), nordstrandite (Al(OH)₃), diaspore (AIOOH), pseudobehmite, transition aluminas, or even amorphous phases can be also used as precursors in hydrothermal synthesis of AA, however, their use is outside of the scope of the present work.

**Table I. Physicochemical properties of selected precursor powders for hydrothermal synthesis**

| **Property** | **Precursor type A** | **Precursor type B** | **Precursor type C** |
|---|---|---|---|
| Al₂O₃ (%) | 65.0 | 65.0 | 65.0 |
| Total Na₂O(%) | 0.1 | 0.08 | 0.35 |
| Soluble Na₂O(%) | 0.01 | - | 0.009-0.048 (max. 0.17) |
| Fe₂O₃ (%) | 0.01 | 0.007 | 0.007 |
| SiO₂ (%) | 0.005 | 0.003 | 0.001 |
| Free Moisture (%) | 0.05 | max. 0.1 | 0.2-0.3 (max. 0.7) |
| Specific Gravity (g/cm³) | 2.42 | 2.42 | 2.42 |
| Refractive Index (-) | 1.57 | 1.57 | 1.57 |
| Grit +325 mesh (%) | 10-30 | 15-50 | 0.01 |
| Median Particle Size (µm) | 25 (average) | - | 0.47 |
| Specific Surface Area (m²/g) | - | - | 12-15 |

The aluminum hydroxide precursor powders often contain trace quantities of organic impurities, such as humic acids and related compounds, which are residues from the raw materials and/or fabrication process, i.e. the Bayer process, which utilizes naturally occurring bauxite ore as starting material. See M. A. Wilson, et al., Industrial & Engineering Chemistry Research 37 (1998) 2410-2415. The presence of organic substances, quantities of which can vary from lot to lot of Al(OH)₃, may result in "organic" odor after the hydrothermal synthesis and/or gray color of the synthesized AA powders. These organic impurities could also interfere with the crystallization process of AA. In some cases, the organic residues can be eliminated by heating the AA powders after synthesis in air atmosphere in order to burn-out the organics. Such process, however, is not very efficient for large-scale hydrothermal production of AA powders.

A specific treatment is the use of selected amounts of hydrogen peroxide (H₂O₂), which are added to the precursor before the hydrothermal treatment. H₂O₂ is a known oxidizer for organics, particularly in aqueous solutions (formation of active HO^{•} radicals) and under hydrothermal conditions (decomposition with formation of oxygen and water) See C. C. Lin, et al., International Journal of Chemical Kinetics, 23 (1991) 971-987; J. Takagi and K. Ishigure, Nuclear Science and Engineering, 89 (1985) 177-186. During the hydrothermal treatment, the hydrocarbons decompose into CO₂ and H₂O. Addition of H₂O₂ was thus found to be very efficient in elimination of gray color and odor by decomposing the organic impurities, without affecting any of the properties of the AA powders.

The use of hydrogen peroxide in the synthesis of high purity AA may create unique hydroperoxide defect sites in the AA, with or without interactions with doping elements/ions, if any. These sites could play a key role in making this AA special in more than one way. Defect sites in the AA crystals may be also involved in bonding between particles during sintering to make catalyst support via calcination of the AA with binders such as boehmite or other oxides. See: Sokol, A. A. et al. J. Phys. Chem. B 106 (2002) 6163-6177; this work may provide good support for such hypothesis.

Seeds can be advantageously used to control the size, composition and rate of crystallization of oxides under hydrothermal conditions. AA seeds, mixed with the aluminum hydroxide precursor powder were found to affect size and particle size distribution of the synthesized AA powders. Seeds having a wide range of median particle sizes between 100 nm and 40 µm were used. The seeds could be hydrothermally synthesized AA powders, either milled or as-synthesized (aggregated), or suitable commercially available AA powders. The relationship between the AA seeds used as starting materials and the final AA hydrothermal products is a complex function of seed quantity (weight/volume fraction of seeds with respect to the precursor powder), particle size, aggregation level, and type of seeds, as well as type of precursor, conditions of hydrothermal synthesis of the AA powders, and method of mixing the seeds with the precursor. This complex relationship has to be established experimentally in each case.

AA powders can be doped with a variety of elements during the hydrothermal synthesis, such as Mn or Cr. See M. N. Danchevskaya, et al., J. Phys.: Condens. Matter, Vol. 16 (2004) S1187-S1196), B, Mg, Ti, Fe, Y, La, Ba, Co, Ni, etc., or their combinations. The doping additives, particularly those, which are not expected to create acidic sites (Mg, Ba, Ca, Sr, Cs, B, etc.), can be selected for specific applications in ethylene oxide (hereinafter "EO") catalyst supports, such as enhancing sinterability (binders) and/or creating unique defect structures. Some sources of doping additives can be water-soluble salts of the doping elements. It is presumed that any type of salts can be used, providing that they do not introduce unwanted impurities, which could change properties of the AA powders. In some cases, doping can also be used to modify properties of the AA powders (chemical composition, size, morphology, aggregation level, size distribution).

Another type of additive can be acid, for example diluted H₂SO₄. Diluted acids were found in this work to be very effective in hydrothermal synthesis of submicron size AA powders (100-250 nm). Acidic environment is known to allow hydrothermal crystallization of AA single crystals, see K. Byrappa and M. Yoshimura, Handbook of Hydrothermal Techhology (Noyes, 2001), as well as boehmite, see R. Bursasco, et al., Mater. Res. Bull., Vol. 19 (1984) 1489-1496; P. A. Buining, et al., J. Am. Ceram. Soc., Vol. 74 (1991) 1303-1307; and D. Mishra, et al., Mater. Lett., Vol. 53 (2002) 133-137. Selection of acid type and concentration depends on such factors as type of precursor, type and content of seeds, and conditions of the hydrothermal treatment.

An alternative to aluminum tri-hydroxides or oxide-hydroxides precursors can be aqueous solutions of aluminum salts, such as Al(NO₃)₃, AlCl₃, Al₂(SO₄)₃, etc., which can form AA powders or AA/boehmite mixtures during hydrothermal synthesis under either basic or acidic conditions, in the presence of AA seeds, and/or other additives, such as H₂SO₄. Such precursors are well suited to produce submicron AA or even nanosized AA powders or AA/boehmite mixtures.

### Description of Hydrothermal Synthesis

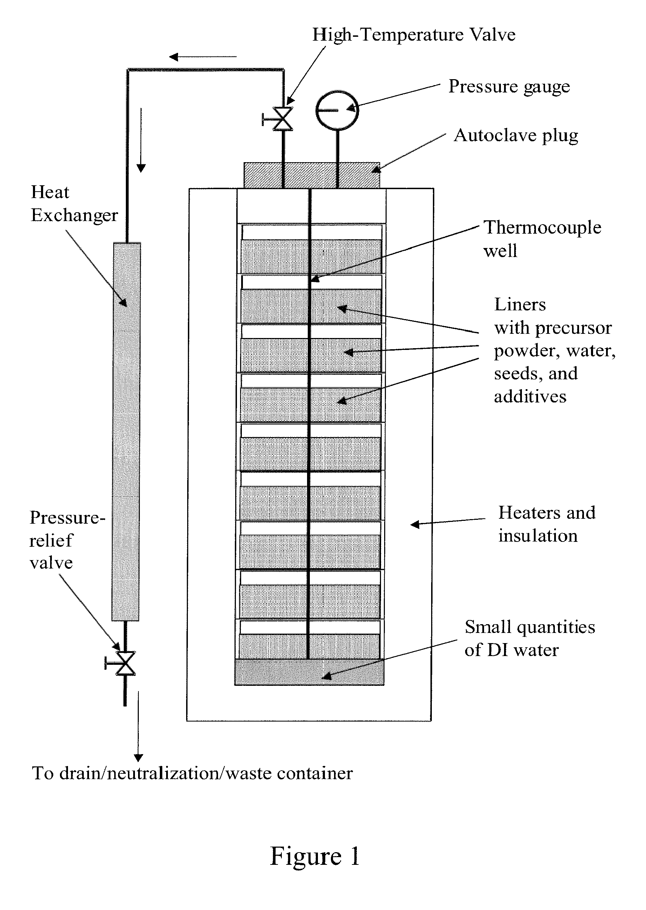

The hydrothermal synthesis of AA powders takes place in a hermetically closed autoclave (pressure vessel, reactor), with at least one thermocouple, temperature controller(s), at least one pressure gauge, with a pressure relief system designed to vent excess pressure during synthesis (Figure 1). Materials of construction of the autoclave can be any materials, which can withstand operating temperatures and pressure in multiple cycles of AA synthesis.

In one embodiment of the present invention, the autoclave is filled with several liners, stacked one on another (Figure 1). The liners may be used to control contamination of the products and/or protect the autoclave from chemical attack. The liners have a central opening allowing inserting thermocouples for temperature measurements and/or control. The material of the liners can by of any type, providing that it does not introduce impurities (chemical, particulate), which can deteriorate the properties of the AA powders. In some cases, however, the liner material can also be used to modify the properties of the AA powders (chemical composition, size, morphology, aggregation level, size distribution). One useful material for the liner is pure titanium metal, specifically Grade 2 titanium. The liner can be formed by molding and/or welding of metal sheets and/or pipes. Both the interior and the exterior of each liner, including new liners, should be cleaned to avoid incorporation of any undesired impurities in the AA product. The load in each liner can be the same or can be different than in the other liners. This allows for synthesis of various types of AA powders in the liners within the same highpressure reactor all made under the same T and P and heating and cooling routines.

A general procedure to fill each liner is as follows: (1) adding de-ionized water (DI) water to each Ti metal liner to reach desired weight or volume; (2) adding appropriate weight/volume of the H₂O₂ and stirring thoroughly in order to obtain homogeneous solution; (3) adding desired weight/volume of chemical additive(s) and/or dopants, and stirring thoroughly in order to obtain homogeneous solution; (4) adding appropriate weight of the precursor powder followed by stirring the container to obtain uniform slurry (if uniform slurry cannot be obtained, more water is added); (5) adding the seeds and stirring the container for 1-2 minutes in order to disperse the seeds uniformly in the slurry; (6) covering the liner with a lid and positioning in the autoclave. Loading of the liners into the autoclave is preceded with cleaning the autoclave to remove any visible contaminants, followed by thorough rinsing with DI water. The liners are positioned on special supports, which allow simultaneous loading/unloading of 1-5 liners at the same time. The bottom of the autoclave is filled with DI water (below the liners), to generate initial pressure in the autoclave during the hydrothermal synthesis. The amounts of water vary and depend upon total water content in the autoclave (calculated as a sum of water in the liners and water from decomposition of the precursors). It should be minimized so during heating up level of water in the bottom does not increase due to expansion to fill the containers (see Figure 1). The time lag between completing loading the liners and starting the heat treatment in the hermetically closed autoclave is several hours. The heat treatment of the hydrothermal synthesis is selected by those skilled in the art from phase diagrams in the Al₂O₃-H₂O system. See L. K. Hudson, et al., chapter "Aluminum Oxide" in Ullmann's Encyclopedia of Industrial Chemistry; Vol. A1 (VCH, 1985).

The following reactions take place under hydrothermal conditions to make AA from alumina hydrates, see O. V. Al'myasheva, et al., Inorg. Mater., Vol. 41 (2005) 460-467:

Al(OH)₃ → AlOOH + H₂O (1)

2AlOOH → α-Al₂O₃ (AA) + H₂O (2)

Reaction (1) can occur above ≈100°C practically independently of the water vapor pressure. Reaction (2) can occur above ≈350°C, but up to ≈450°C only at pressures not exceeding ≈15 MPa (≈2,200 psi), because of the presence of AlOOH (diaspore)-stability region, which extends from 270°C to 450°C and from ≈15 MPa to over 100 MPa. In addition to raw materials and reactor design, very specific time, temperature and pressure "ramps" are required to produce AA of the desired characteristics. Due to constraints imposed by the strength of the autoclave, conducting synthesis above 450°C at high pressure does not seem to be practical. Therefore, at AA synthesis temperatures below 450°C (practical range is 380-430°C), the pressure is reduced to or below ≈15 MPa (≈2,200 psi). In order to achieve this objective, water vapor pressure is released simultaneously with increasing temperature in the autoclave.

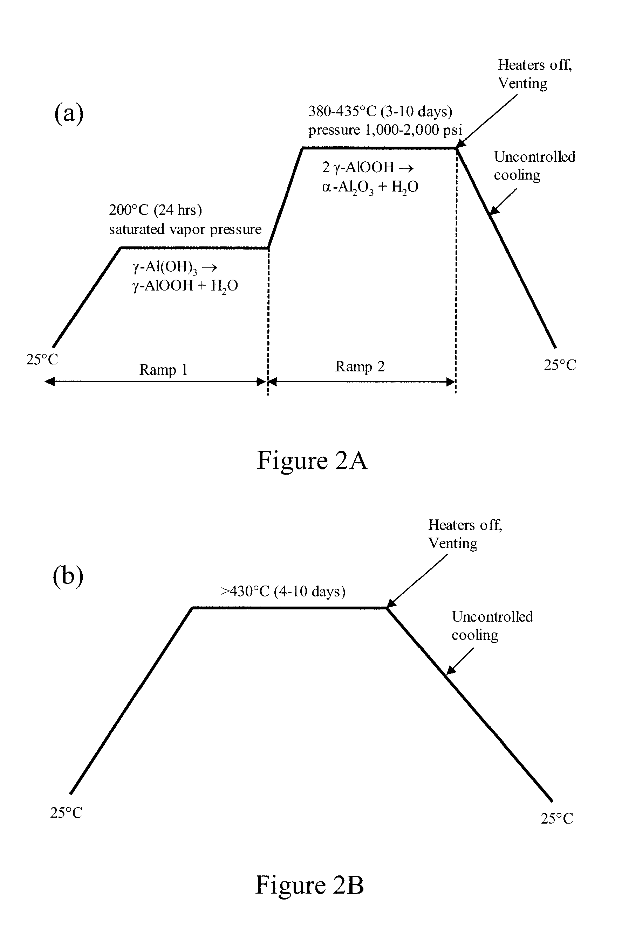

In one embodiment of the present invention, the ramps of the hydrothermal heat treatment in AA synthesis are as follows (Figure 2A): Ramp 1: from room temperature to 200°C with a heating rate of 11.7°C/hr, followed by holding at 200°C for 24 hours with temperature stability of a few °C, with pressure being equal to the saturated vapor pressure of water at this temperature; Ramp 2: 200°C - Maximum Temperature with a heating rate of 9.0-23.3°C/hr, followed by holding at Maximum Temperature for 5-10 days, with temperature stability of a few °C, with pressure not exceeding about 3,000 psi. The Maximum Temperature is between 380°C and 430°C. Such ramps selection enables synthesis of AA powders with sizes 1-40 µm irrespectively of the precursor used, as well as submicron AA. However, such ramp selection for submicron AA powders is inferior to the described below single-ramp hydrothermal treatment.

In another embodiment of the present invention, there is only single ramp of the hydrothermal heat treatment in AA synthesis (Figure 2B): from room temperature to Maximum Temperature with heating rate of 9.0°C/hr, followed by holding at Maximum Temperature for 3-10 days, with temperature stability of a few °C, with pressure not exceeding about 3,000 psi. The Maximum Temperature is at least 430°C. Such ramps selection enables and is useful for synthesis of AA powders with sizes below 1 µm, more specifically between 100 nm and 250 nm.

In all cases of AA synthesis, during the hydrothermal heat treatment, when the autoclave is ramping up towards the Maximum Temperature, when the temperature increases above 300°C (saturated vapor pressure of water is 1246 psi at 300°C), the pressure relief procedure is initiated in order to keep the pressure at levels enabling AA synthesis. The high-temperature valve is open so the steam can be vented through the heat exchanger (Figure 1). Use of a regular valve will result in a leak due to very high temperature of the steam exiting the autoclave (300°C-450°C). Pressure is controlled using the pressure-relief valve located at the end of the venting system, which prevents excessive reduction of pressure in the autoclave (resealing pressure above 1,000 psi). The heat exchanger can use any cooling medium providing that it can cool steam from temperatures between 300°C and above 430°C, to well below the boiling point of water, such as to the room temperature.

After completing the hydrothermal synthesis of AA (one of the indications of completing the reaction is stable pressure at constant temperature), the autoclave can be either naturally cooled down to room temperature, with subsequent drying of the synthesized powders in an oven above 100°C or the autoclave can be vented while still at high temperature. The venting involves opening the high-temperature valve and bypassing the pressure-relief valve. The entire water present the autoclave at the end of the hydrothermal synthesis is vented either directly to the drain or to the neutralization tank. If toxic additives are present, the entire content of the autoclave is collected in a drum and subsequently disposed according to local/state/govemment regulations.

When the autoclave cools down to a temperature close to room temperature, it can be opened. If venting was applied, the powders are usually dry. After opening and unloading the liners with synthesized AA powders inside, the autoclave is cleaned from any residues. Contents of every liner are briefly inspected by optical microscopy in order to confirm crystal size and phase purity of the AA powders. This practice prevents mixing good and lower quality material or powders with different characteristics, if any.

In each liner, top layer of powder with a thickness of at least ¼" is removed and discarded. The very top part of the powder tends to accumulate impurities, particularly sodium, iron, and silica. The remaining content of each liner can be collected in a fiber drum (or pail) as good material, however at least ¼" of material attached to the walls and to the bottom of the container is left in the container and subsequently discarded. This part of the powder tends to accumulate impurities as well, particularly sodium, iron, and silica. An alternative way to avoid materials removal is to use improved liner design, which includes a double bottom and a top screen, which can collect the top and bottom impurities.

### Description of Milling of the AA Powders

AA powders, which can be used in agglomerated form, do not have to be milled. However, in many cases milling is necessary to break necks connecting individual AA crystallites in order to obtain narrow particle size distributions.

Hydrothermally synthesized AA powders with sizes 1-40 µm can be milled using either wet or dry-milling approach using basically any type of a mill. However, use of mills, which can introduce excessive impact forces (ball mills, planetary, vibratory mills), may damage unique morphology of the AA powders. Therefore, use of attritor-type mills is useful under either wet or dry conditions, in batch or continuous flow-through modes. The authors have found that brief dry milling in an attritor mill, which does not require subsequent powder drying like in case of wet milling, deagglomerates the AA powders without damaging their unique morphology. The milling conditions are adjusted individually based upon the milling method used and the powder being milled. Some specific conditions will be provided in the Examples section.

Hydrothermally synthesized AA powders with sizes below 1 µm can be milled using either wet or dry-milling approach using either horizontal or attritor type of mills. Regular ball-mills so far were found to be ineffective in their deagglomeration. Wet milling in a horizontal type of a mill, which requires use of dispersants is a very effective way to prepare aqueous dispersions of submicron AA powders. When dry powder is needed, batch-type dry attrition grinding can be effectively used to deagglomerate the powder. However, care is taken to avoid secondary agglomeration. Some specific milling conditions will be provided in the Examples section.

In order to preserve the high chemical purity of the AA powders, internal lining materials of the mills are carefully selected. This applies also to the arms of the agitator shaft and the grinding media (balls). Presence of steel elements will result in iron contamination in addition to gray color due to highly abrasive nature of the AA powders. The most efficient materials appear to be high wear resistance stabilized zirconia and/or high-purity high-strength alumina ceramics. Chemical analysis after dry grinding of a variety of AA powders in mills containing stabilized zirconia and/or 99.9% alumina liner, agitator arms, and balls, revealed minimal or no chemical contamination even under extreme dry grinding conditions.

### Description of Preparation of Porous AA Supports

As-synthesized (i.e. aggregated) and/or milled AA powders or AA/boehmite mixtures synthesized hydrothermally can be used as starting materials in preparation of porous AA supports. The supports can be made from AA or AA/boehmite powders or granules made by simple sieving or compaction (uniaxial at 2-200 MPa pressure or filter pressing at 10 MPa pressure) with or without sintering additives, with or without binders with or without subsequent heat treatments. It can be desirable that the AA supports be made by forming extrudates and subsequent heat treatment, in order to generate mechanical strength.

AA or AA/boehmite extrudates can be formed by adaptation of processes, known in the open literature. See for example, EP 0900128 B1; US 6,846,774 B2; US 5,380,697; Applied Catalysis A: 244 (2003) 59-70, A. Ayame et al.

In one embodiment of the present invention, the AA or AA/boehmite extrudates are made without any binders (i.e. sintering additives), by mixing hydrothermally synthesized AA or AA/boehmite powders with water or sufficient amount of another burnout material (for example, petroleum jelly, polyvinyl alcohol, etc.) using a blender, mixer, or mill, etc. and forming the extrudate using extruding apparatus.

In another embodiment of the present invention, the AA or AA/boehmite extrudates are made by mixing hydrothermally synthesized AA or AA/boehmite powders with sufficient amount of Cs salts (for example, carbonate, hydroxide, aluminate, sulfate, etc.) used as binders (i.e. sintering additives), and sufficient amounts of burnout material(s) (for example, water, petroleum jelly, polyvinyl alcohol, etc.) using a blender, mixer, or mill, etc. and forming the extrudate using extruding apparatus.

In another embodiment of the present invention, the AA or AA/boehmite extrudates are made by mixing hydrothermally synthesized AA or AA/boehmite powders with sufficient amount of binders (i.e. sintering additives), such as TiO₂, ZrO₂, SiO₂, Mg Silicate, CaSilicate or their mixtures, and sufficient amounts of burnout material(s) (for example, petroleum jelly, polyvinyl alcohol, etc.) using a blender, mixer, or mill, etc. and forming the extrudate using extruding apparatus. The sintering-enhancing elements used in binders, such as Ti, Zr, Si, Mg, Ca, etc., or their mixtures, can be also incorporated in AA during the hydrothermal synthesis by doping and/or from AA precursors, containing elevated levels of such elements.

In a specific embodiment of the present invention, the AA or AA/boehmite extrudates are made by mixing hydrothermally synthesized AA or AA/boehmite powders with sufficient amount ofboehmite used as binder (i.e. sintering additive), and sufficient amounts of burnout material(s) (f. e. water, petroleum jelly, etc.) using a blender, mixer, or mill, etc. and forming the extrudate using extruding apparatus.

Appropriate extruding apparatus can be used to prepare the extrudate, for instance extruders manufactured by The Bonnot Company, Uniontown, OH. The diameter of the extrudate can be as small as 1/32", the applied pressure can range between 100 and 3,000 psi or so. The conditions of forming the extrudate, as well as amounts and types of the binders and burnout materials, are determined experimentally for each type of AA or AA/boehmite powder, in order to yield optimum properties of the AA supports after subsequent heat treatment.

The heat treatment of the extrudates involves removal of water and other volatile matter between the room temperature and 200°C, removal of burnout materials, if any, up to 500°C, and finally building the strength of the porous support at temperatures up to 1,600°C, up to 1,450°C, together with transformation of boehmite, if any, into AA phase above 1,100°C. The heat ramp(s), including temperatures, durations, and heating rates during the extrudate heat treatment are selected to obtain desired mechanical strength and microstructure of the support, and are developed experimentally in each particular case.

The AA porous supports obtained by the heat treatment of AA or AA/boehmite extrudates with or without additives described above, can be used as AA supports for EO catalysts.

### Description of Materials Characterization

Phase composition of precursor powders, powders after the hydrothermal synthesis, and porous AA supports was characterized by X-ray diffraction using Advanced Diffraction System X1 diffractometer (XRD, Scintag Inc.) using Cu K_{α} radiation, in the 2Θ range between 10-70° with a 0.05° step size and 0.3-0.7 s count time. The chemical identity of the materials was determined by comparing the experimental XRD patterns to standards compiled by the Joint Committee on Powder Diffraction and Standards (JCPDS), i.e. card # 10-0173 for α-Al₂O₃ (corundum, AA), #03-0066 for AIOOH (boehmite), and # 22-1119 for 5Al₂O₃·H₂O (tohdite).

The morphology and phase purity of the synthesized AA and AA/boehmite powders, as well as microstructures and fracture surfaces of porous AA supports, were examined using both optical microscope (Vanox, Olympus, Tokyo, Japan) under 50-500× magnifications and scanning electron microscope (SEM, Model S-4500, Hitachi, Japan) at 5 kV accelerating voltage. Prior to the SEM examination, the materials were attached to aluminum holders using a conductive carbon tape and subsequently sputtered with thin conductive layers of palladium.

Chemical compositions in the AA and AA/boehmite powders at various steps of their processing were determined using DC Arc method at NSL Analytical (Cleveland, OH). The powders were analyzed for the following elements (detection limits in brackets): Na (10 ppm), Si (10 ppm), Ca (10 ppm), Mg (10 ppm), Ti (10 ppm), Zr (50 ppm), Cu (10 ppm), Fe (10 ppm).

Chemical moieties present on the surface of the AA and AA/boehmite powders and porous AA supports were determined using X-ray photoelectron spectroscopy (XPS) using the Phi 5600 ESCA system. The AA and AA/boehmite powders were attached to the holders using conductive carbon tape. Porous AA supports were broken into small pieces and only fracture surfaces were analyzed. The XPS spectra were acquired from the surface areas with diameters of approximately 1 mm on each sample. Only one spot on each sample was analyzed by this technique. In a typical XPS measurement, a 20-60 min. overview scans were performed in the binding energy range of 0-1,100 eV.

Particle size distributions of AA powders were measured in DI water by Microtrac laser light diffraction particle size analyzer (Model S3000, Microtrac, Inc., Montgomeryville , PA). In most cases, the powders were not ultrasonicated prior to the particle size analysis, however surfactants were added to the water slurry in order to disperse the powders. Refractive indices of 1.77 and 1.33 were used for AA and water, respectively. An average of three subsequent measurements was calculated, assuming transparency of the powders and irregular particle shape.

Specific surface areas (BET) of selected powders and porous AA supports were measured from single-point or 40-point BET nitrogen adsorption isotherm at Micromeritics Analytical Services (Norcross, GA) or from 5-point BET nitrogen adsorption isotherm in the range of relative pressures (p/pₒ) between 0.07 and 0.24 using Nova 1200e equipment (Quantachrome Inst., USA).

Pore sizes, volumes, and distributions of porous AA supports were measured using either mercury intrusion porosimeter (Model Poremaster 60, Quantachrome Inst., USA, pore sizes range of 3 nm - 200 µm) or at Micromeritics Analytical Services (Norcross, GA) using both 40-point nitrogen adsorption isotherm (pore sizes 20 - 3,000 Å) and mercury intrusion analysis (pore sizes 30 nm - 360 µm).

Porosities and pore volumes were measured from water absorption data and corresponding masses at room temperature, assuming absence of closed (i.e. impenetrable) pores. The water absorption tests of porous AA supports were performed by slowly immersing the AA supports of a known weight in DI water, heating the water close to the boiling point for 1 hour in order to remove any air entrapped in the pores, and finally measuring the weight of the wet AA supports after the water has cooled down to the room temperature. Comparison of the mass of the carriers in dry and wet state allowed calculations of the open porosity (volume % units) pore volume (cm³/g units) and water absorption (% units).

Crush strength of the porous AA supports was measured using a hydraulic press attached to a calibrated heavy-duty electronic balance. In each measurement, AA support was placed on a flat surface of the electronic balance and was slowly pressed by a steel plate mounted to a hand-operated hydraulic press. The symmetry axis of the porous AA supports was always parallel to the metal surfaces, i.e. the load was applied in the direction perpendicular to the symmetry axis of the supports. The load under which the support has cracked was recorded and used for calculations of the crush strength. Total of 5-10 pieces with the same size were crushed that way, in order to calculate the average and minimum crush strength for each type of porous AA supports. In some cases, compressive strengths of the AA carriers were measured in the direction parallel to the support axis using Zwick equipment at a traverse speed of 2 mm/min. The average strength values and corresponding confidence intervals at 0.95 confidence level were calculated from measuring 7-8 pellets.

### Description of Results

### HYDROTHERMAL SYNTHESIS OF AA AND AA/BOEHMITE POWDERS

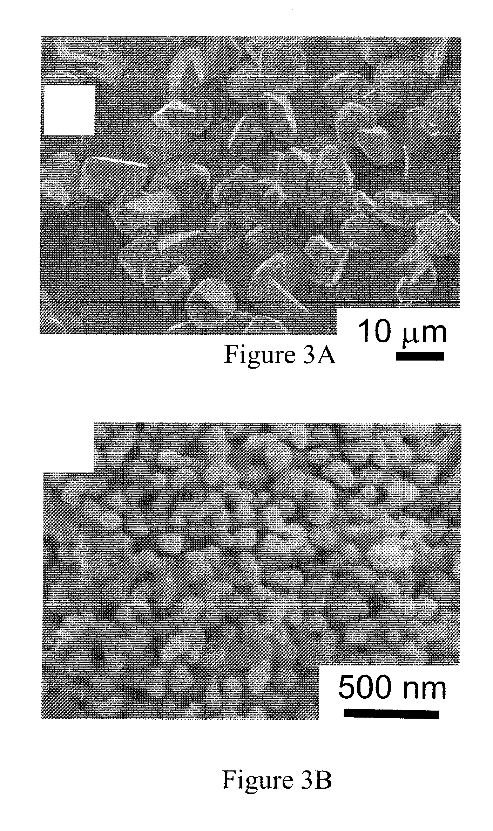

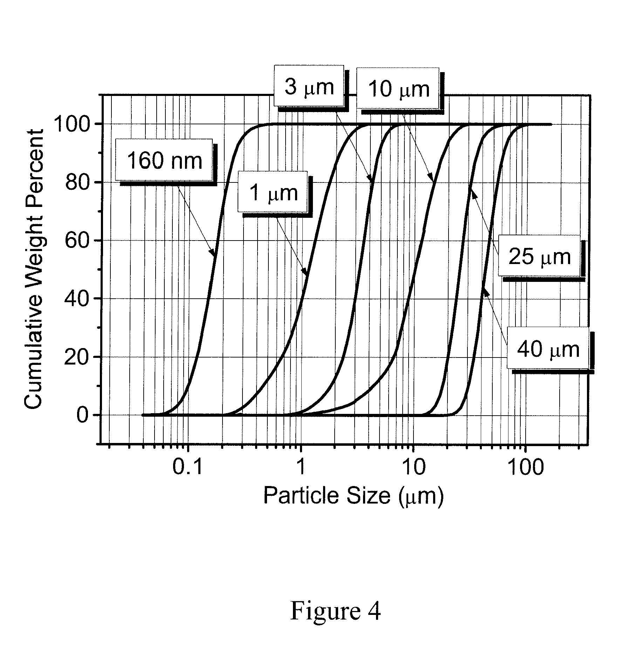

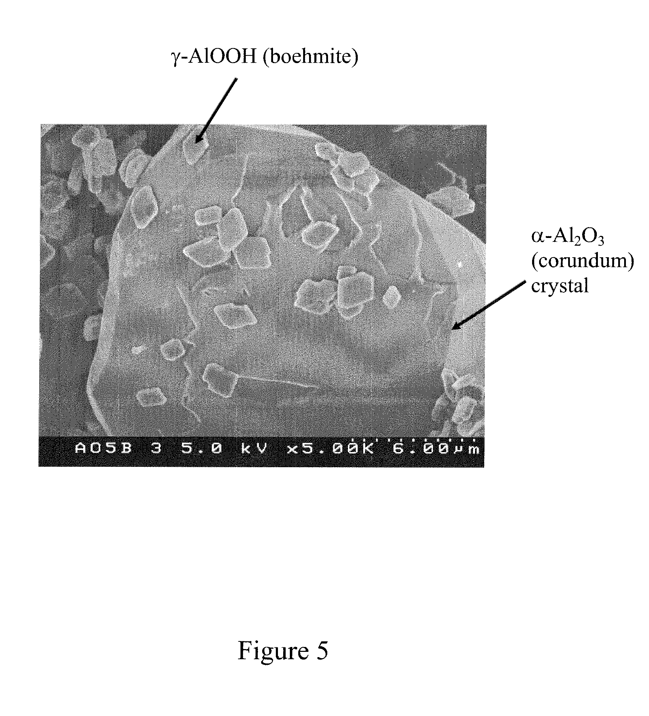

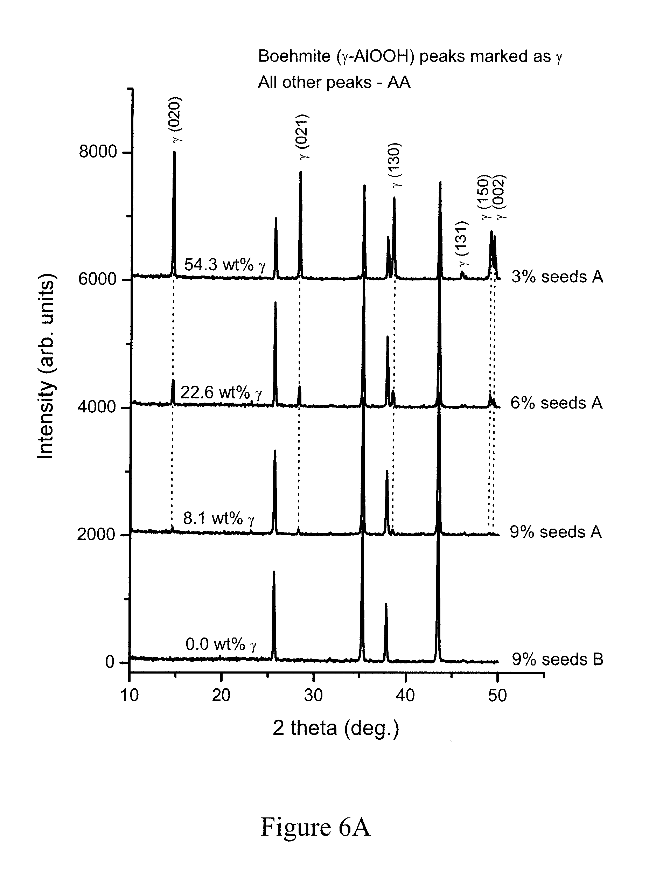

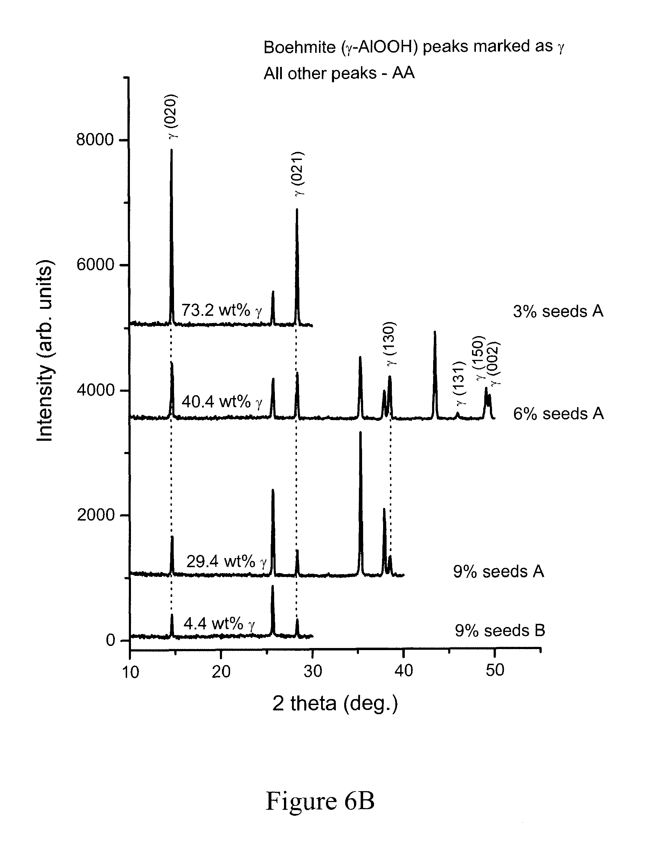

Typical physicochemical properties of the AA powders synthesized by the hydrothermal method, such as particle size, morphology, chemical and phase purities, bulk densities, and specific surface areas (BET) are summarized in Table II. The AA powders exhibit combination of high phase and chemical purity with unique morphology, which make them powders of choice for a variety of applications and in particular for production of supports for EO catalysts. SEM photograph shown in Figure 3A reveals typical morphology of the AA powders with sizes ranging from 1 µm through 40 µm. The individual crystallites are weakly aggregated and consist of very well defined equiaxed grains with sharp edges and narrow size distributions (as shown is powder with D₅₀= 10 micron). Each grain is a single crystal of the AA (corundum) phase. Submicron AA powders shown in Figure 3B consist of well-defined equiaxed round crystals with narrow size distributions (as shown is powder with primary particle size of about 100 nm). These AA powders exhibit elevated level of aggregation; nevertheless they can easily be milled to the primary particle sizes and dispersed in water. Typical particle size distributions of selected synthesized AA powders with marked values of median particle sizes (D₅₀) are revealed in Figure 4. The conversion to AA can be complete or limited. Several factors, such as lower temperature, shorter synthesis time, special conditions of the first ramp in dual-ramp hydrothermal heat treatment, etc., can be used to make unique AA in combination with various quantities of AlOOH (boehmite) attached to the AA surface. The small boehmite plate-like particles tend to surround larger AA crystals and attach to their surface, as shown in Figure 5. Content of boehmite could vary from 0.01% to 100% (completely unreacted). These special conditions can be applied to produce very unique mixtures of boehmite and AA crystals of different sizes and different mass ratios of AA/boehmite. Examples of hydrothermally synthesized AA/boehmite powders, with boehmite content ranging between 0.0 and 73.2 wt%, are shown in Figures 6A and 6B. These are useful for production of extrudates with a high content of high purity AA and special pore volume and pore size distribution to be used as supports for EO catalysts. Effects of various synthesis factors on properties of the AA and AA/boehmite powders are summarized below.

**Table II. Typical physicochemical properties of AA powders synthesized by hydrothermal**

| **Nominal median particle size (D₅₀**) | **1 - 40 µm** | **100 nm - 250 nm** |
|---|---|---|
| Morphology | Well defined equiaxed grains (single crystals) with sharp edges and corners and narrow size distributions | Well defined equiaxed round grains with narrow size distributions |
| Crystal form | 100% α-Al₂O₃ | 100% α-Al₂O₃ ^{#} |
| Chemical purity (%) | >99.98 | 99.85-99.9 |
| Loose bulk density (g/cm³) | 0.5-1.5 | - |
| Packed bulk density (g/cm³) | 1.0-2.3 | - |
| Surface area, BET (m²/g) | 0.04-2.2 | - |
| Impurities Si | <0.001% | 0.003-0.018% |
| Na | 0.002-0.014% | 0.050-0.055% |
| Fe | 0.002-0.005% | 0.008-0.011% |
| Cu | <0.001 % | <0.001 % |
| Mg | <0.001 % | <0.001 % |
| Ti | <0.001 % | <0.001 % |
| Available form of powder | Ground (i.e. milled), unground (i.e. as-synthesized aggregates) | Ground (i.e. milled), unground (i.e. as-synthesized aggregates), aqueous dispersion |

| | | |
|---|---|---|
| ^{#} 100 nm powder contains trace quantities of tohdite. | | |

### Temperature of the hydrothermal synthesis

No AA phase was observed to form when the synthesis temperature was lower than 380°C even in the presence of large fraction of seeds. No experiments at temperatures over 435°C were conducted; although it is believed that stability region of AA extends to at least 500°C. See the phase diagram in L. K. Hudson, et al., chapter "Aluminum Oxide" in *Ullmann's Encyclopedia of Industrial Chemistry;* Vol. A1 (VCH, 1985). With increasing temperature, size of the primary crystallites increases, both with and without seeds. Also, increasing temperature reduces time necessary to full conversion of the precursor into AA. Powders, which did not achieve 100% conversion into AA, consisted of unique mixtures of AA and AIOOH (boehmite). These are particularly suitable for manufacture of support for EO by calcination of extrudates made from the AA/boehmite mixtures. Temperatures of synthesis used to make 1-3 µm AA powders were usually below 400°C while the larger powders needed temperatures over 400°C. However, the submicron powders required at least 430°C to form.

### Time of the hydrothermal synthesis at maximum temperature

With increasing time of the hydrothermal synthesis, conversion to the AA was more complete. The shortest time to achieve 100% conversion was about 2 days, the longest about 10 days. With increasing temperature, time to full conversion decreased. Presence of seeds reduced the synthesis time. No effects of the synthesis time on sizes of the crystals were observed. In order to synthesize AA/boehmite powders, synthesis times as short as less than 24 hours, were sufficient. The concentration of boehmite in the AA/boehmite mixtures could be controlled by the synthesis time (see Figures 6A and 6B).

### Pressure of the hydrothermal synthesis

Typical pressure range for AA and AA/boehmite synthesis was 1,000-2,000 psi. The minimum and maximum measured pressures, which allowed AA synthesis, were 650±100 psi and 2,700±100 psi, respectively. Autoclave leaks, which reduced the pressure, were detrimental to the process. No effects of the pressure on size, morphology, aggregation, or chemical purity were observed for the submicron size AA powders and AA powders synthesized using Precursor Type C. However, pressure was found to affect the synthesis of 1-40 µm AA powders when Precursor Type A and Precursor Type B precursors were used. Pressures below 1,500 psi at Maximum Temperature resulted in non-uniform and heavily aggregated powders with broad size distributions of the individual crystallites. Conversely, pressures above 1,500 psi, specifically around 2,000 psi, at Maximum Temperature resulted in more uniform and relatively weakly aggregated powders with narrower size distributions of the individual crystallites.

### Heating Rate

The heating rate of 23.3°C/hr in Ramp 2 was found to be very important factor governing uniformity of the as-synthesized AA powders when Precursor Type A and Precursor Type B precursors were used. At lower heating rates the powders were more aggregated and exhibited inferior uniformity and size distributions. The selection of heating rates allows for production of a variety of precursors to make AA extrudates to be used for making EO catalyst supports.

### Temperature/time of boehmite formation ramp

Ramp 1 in synthesis of 1-40 µm AA powders results in hydrothermal formation of AIOOH (boehmite). Since AA subsequently forms from boehmite during Ramp 2, in order to optimize AA synthesis, the synthesis of boehmite is optimized as well. The range of conditions for boehmite synthesis is 80-350°C (several hours to several days), with more specific range being 150-270°C (6-48 hrs). The optimum conditions were experimentally established at 200°C for about 24 hours. Temperatures higher than 200°C resulted in higher tendency to form AA/boehmite mixtures. The key point here appears to be synthesis of as fine and reactive boehmite as possible.

### Concentration and size of seeds

The AA seeds were found to be among the most effective modifiers of the crystallite size of AA powders and phase composition of the AA/boehmite mixtures. The smaller the AA seeds, the higher their concentration, and the more uniformly they are distributed in the precursor, the finer the hydrothermally synthesized AA crystallites. However, the size of AA crystallites cannot be much smaller than the size of the seeds used. Contents of seeds required to significantly reducing crystallite size of AA ranged between 0.05% and 12.0%, although higher contents of seeds could be used as well. However, higher seed concentrations are not practical due to increased cost and reduced impact on size of the AA powders. With increasing seed concentration, kinetics of the AA synthesis increased, which was manifested by lower contents of boehmite in AA/boehmite mixtures at higher concentrations of the AA seeds (Figures 6A and 6B). Thus, the concentration of boehmite in the AA/boehmite mixtures could be also controlled by the type and concentration of the AA seeds (see Figures 6A and 6B).

### Presence of dopants and additives

Presence of 0.05-0.1M-H₂SO₄ aqueous solution results in formation of submicron AA crystals (100-250 nm). Use of acids, such as H₃PO₄ or other inorganic acids is known to control the size and also morphology of the AA crystallites, for example to induce plate-like morphology (US 6,197,277; US Patent Application No. 20010043910). Use of CrCl₃ or KMnO₄ in order to introduce doping elements of Cr and Mn in concentrations of 0.01%, and 0.05%, respectively, did not result in any modifications of the AA size or morphology.

### POROUS AA SUPPORTS

Porous AA supports (granules) from hydrothermally synthesized high-purity AA powders.

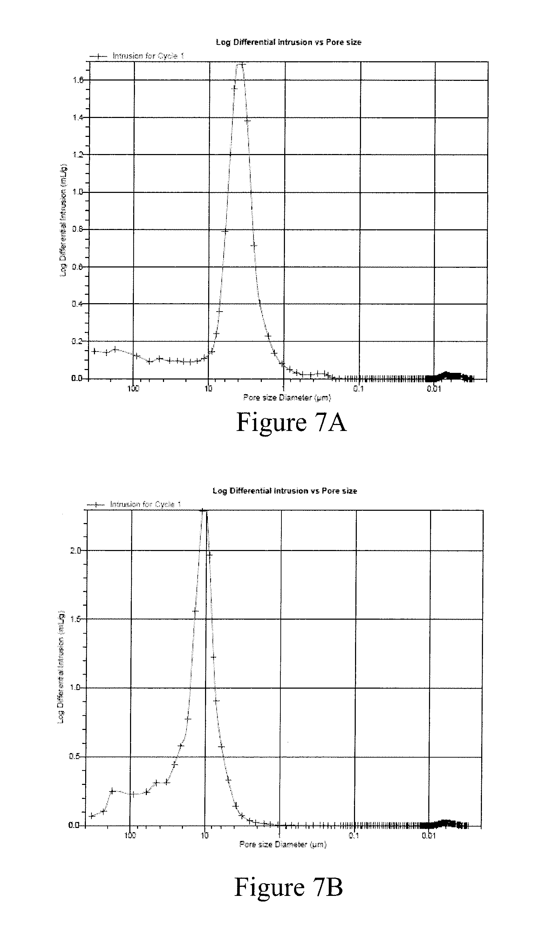

Properties of all green and selected heat-treated AA supports in form of granules made of high-purity hydrothermally synthesized AA powders with different particle sizes, are summarized in Table III. The median pore diameter in green supports varied between 4 and 14 µm and increased proportionally to the increasing nominal AA particle size. In most cases, single-modal particle size distributions were observed (Figures 7A and 7B). The heat treatment at 1,400°C (4 h) did not reduce the pore diameter of the supports, despite some increase of mechanical strength and reduction of the BET surface area. SEM analysis confirmed this finding. The SEM revealed also that the microstructure of the supports did not significantly change after calcination even at 1,550°C (3 h) irrespectively of the AA particle size, except the 3 µm AA, where rounding of sharp crystallite edges and corners was observed, indicating surface diffusion phenomena. The low sinterability of the supports may be partially due to the very high porosity of the green supports (78-84% as shown in Table III), which implies that use of external pressure exerted on the powder by for example extruder might increase the green density and consequently increase sinterability to yield stronger AA supports, even without using sintering additives. Mixtures of AA powders with different particle sizes could be used as well in order to increase green density of the AA supports.

**Table III. Properties of selected 1.0-1.5 mm AA granules heat-treated in air at 900-1,550°C (3-8 hrs). The granules consisted of hydrothermally synthesized AA powders with 3-10 µm nominal particle sizes.**

| **Nominal AA Particle Size** | **Conditions of the Heat Treatment** | **40-point N₂ Adsorption Isotherm** | | | **Hg Intrusion Porosimetry** | |
|---|---|---|---|---|---|---|
| | | **BET Surface Area (m²/g)** | **Total Pore Volume # (cm³/g)** | **Average Pore Size * (Å)** | **Median Pore Diameter (µm)** | **Porosity (%)** |
| 3 µm | Green | 1.13 | 0.00308 | 108.8 | 4.39 | 82.5 |
| | 1,400°C (4 h) | 0.71 | 0.00164 | 92.5 | 4.28 | 73.9 |
| 6 µm | Green | 0.80 | 0.00180 | 89.9 | 8.54 | 77.7 |
| | 1,400°C (4 h) | - | - | - | - | - |
| 8 µm | Green | 0.58 | 0.00128 | 87.7 | 9.80 | 83.6 |
| | 1,400°C (4 h) | - | - | - | - | - |
| 10 µm | Green | 0.49 | 0.00102 | 82.3 | 12.25 | 80.2 |
| | 1,400°C (4 h) | 0.30 | 0.00062 | 82.8 | 13.81 | 84.5 |

| | | | | | | |
|---|---|---|---|---|---|---|
| # Single point adsorption total pore volume of pores. * Adsorption average pore width | | | | | | |

### High-strength AA supports from hydrothermally synthesized high-purity AA powders by powder compaction followed by sintering.

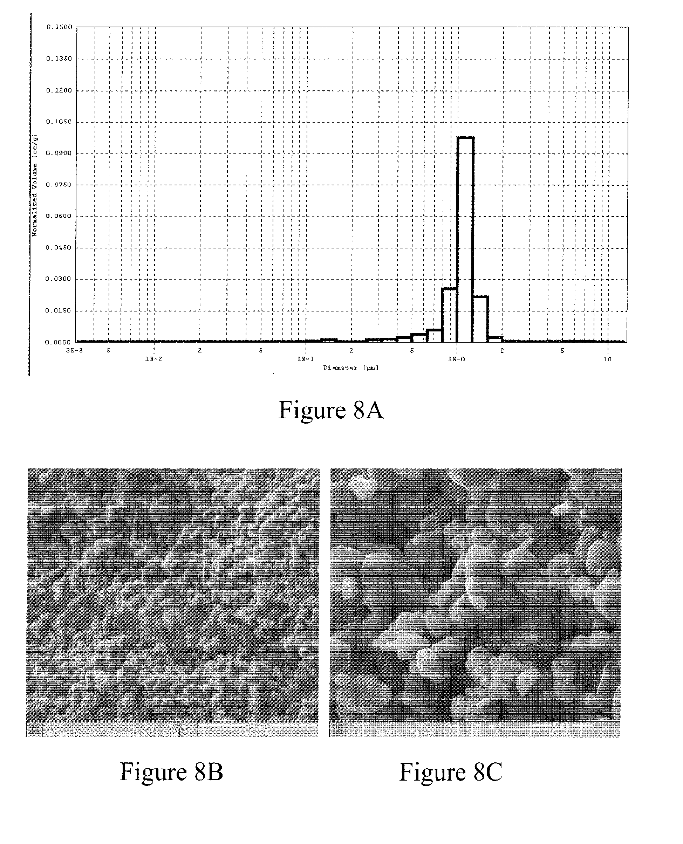

The porosities of the AA supports, obtained by uniaxial compaction of milled and unmilled 3 µm and 4 µm AA powders followed by sintering ranged from 35% to 58%, median pore diameters varied between 1.2 µm and 5.5 µm, BET surface areas were 0.24-0.80 m²/g, and the compressive strength ranged between 6 and 110 MPa (see Table IV for details). All pore size distributions were basically single-modal (3 µm as-synthesized powder sintered at 1400°C for 5 h may be an exception). This combination of properties is typical for AA supports prepared by powder compaction followed by sintering and differs considerably from both the AA granules and AA supports obtained by extruding. The AA supports exhibit considerably higher strengths but also have lower porosities than the extruded AA supports or AA granules. Single-modal pore size distributions are also typical for the AA supports prepared by powder compaction. Since very low compaction pressures were used, these results imply necessity of using fillers to further increase the porosity, which may result in the formation of bi-modal particle size distributions. The SEM analysis confirmed uniformity of mictrostructure, i.e. very uniform grain size and pore size distributions in all cases (Figure 8A). See Figures 8B and 8C for examples of pore size distribution and microstructure of porous AA supports made from 3 µm powder compacted without additives at 5 MPa and subsequently sintered at 1400°C (5h): porosity = 37.2%, BET surface area = 0.80 m²/g, Total pore volume = 0.264 cm³/g, compressive strength = 57.8 MPa. The SEM revealed also that the microstructure of the AA supports with all particle sizes did not significantly change after sintering, except for rounding of sharp crystallite edges and corners, indicating surface diffusion phenomena. In each case, increasing the sintering time at 1400°C from 5 hrs to 20 hrs or increasing the sintering temperature, resulted in significant increase of strength accompanied by only slight reductions of porosity, median pore size, and specific surface area. Strengths of the AA supports synthesized from the milled powders were much higher than strengths obtained from not milled powders, which also reflects the fact that the AA supports from the milled powders had lower porosities. Worth noted are very small confidence intervals of strength in all cases, which reflects very narrow distribution of strengths values (based on 7-8 samples measured), and is probably due to the very uniform microstructure originating from uniform AA powders synthesized hydrothermally. Although the unmilled powders had higher porosities and pore volumes, BET surface areas were reduced with respect to the milled powders. Reduction of the compaction pressure from 5 MPa to 2 MPa and sintering temperature (not necessarily time) from 1400°C to 1350°C leads to significant increase of porosity and pore volume and moderate reduction of strength. The best combination of strength, porosity and surface area were obtained for milled 3 µm powders compacted at 2 MPa and sintered at 1350°C (5 hrs): 50% porosity, 0.264 cm³/g total pore volume, 0.80 m²/g BET surface area, and 24 MPa average compressive strength.

**Table IV. Properties of AA supports made from hydrothermally synthesized AA powders with 3-4 µm nominal particle sizes, uniaxially compacted under 2-5 MPa pressure and subsequently sintered in air at 1,350-1,400°C (5-20 hrs).**

| **Nominal AA Particle Size** | **Conditions of the Heat Treatment** | **Porosity (%); (Median Pore Diameter (µm))** | **BET Surface Area (m²/g)** | **Total Pore Volume (cm³/g)** | **Compressive Strength (MPa)** |
|---|---|---|---|---|---|
| 3 µm (milled) | Starting powder | - | 1.65 | - | - |
| | 1,350°C (5 h) | 49.9% (2.2 µm) | 0.80 | 0.264 | 24.4 ±0.7 |
| | 1,400°C (5 h) | 37.2% (1.2 µm) | 0.80 | 0.164 | 57.8 ±4.5 |
| | 1,400°C (20 h) | 35.4% (-) | 0.75 | - | 109.8 ±1.2 |
| 4 µm (milled) | Starting powder | - | 0.92 | - | - |
| | 1,350°C (5 h) | 49.0% (3.3 µm) | 0.42 | 0.240 | 22.6 ±0.3 |
| | 1,400°C (5 h) | 44.6% (2.3 µm) | 0.47 | 0.240 | 10.5 ±1.3 |
| | 1,400°C (20 h) | 42.6% (-) | 0.44 | - | 43.1 ±3.0 |
| 3 µm (not milled) | Starting powder | - | 0.77 | - | - |
| | 1,350°C (5 h) | - | - | - | - |
| | 1,400°C (5 h) | 57.5% (3.5 µm) | 0.69 | 0.346 | 5.5 ±0.2 |
| | 1,400°C (20 h) | 56.9% (-) | 0.60 | - | 8.9 ±0.6 |
| 4 µm (not milled) | Starting powder | - | 0.29 | - | - |
| | 1,350°C (5 h) | - | - | - | - |
| | 1,400°C (5 h) | 51.1% (5.5 µm) | 0.29 | 0.263 | 9.9 ±1.1 |
| | 1,400°C (20 h) | 49.9% (-) | 0.24 | - | 19.2 ±0.8 |

High-strength, high-porosity unreinforced AA supports from hydrothermally synthesized high-purity AA powders by extruding followed by sintering - effects of extruding compositions.

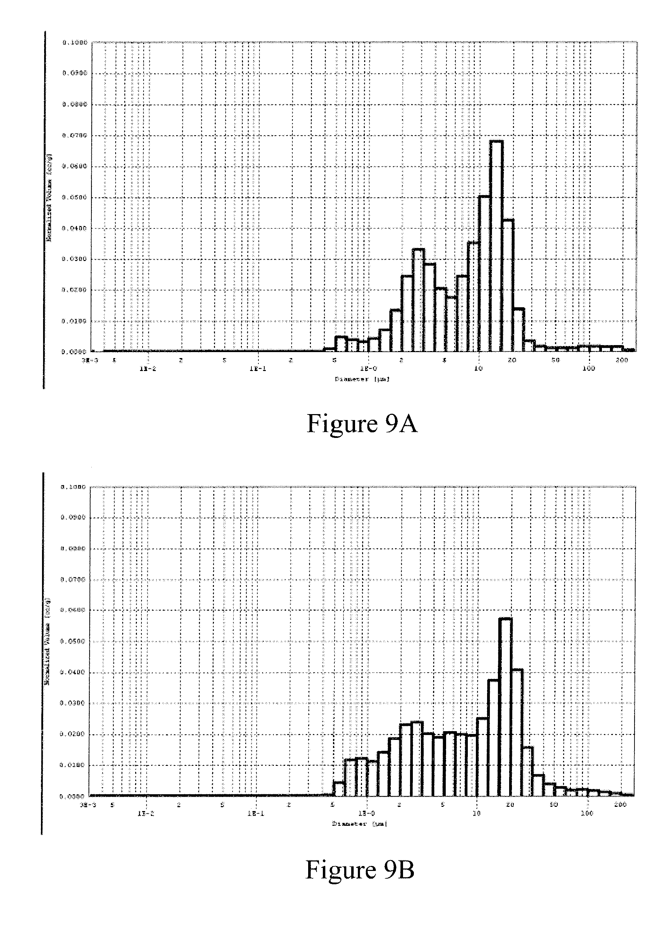

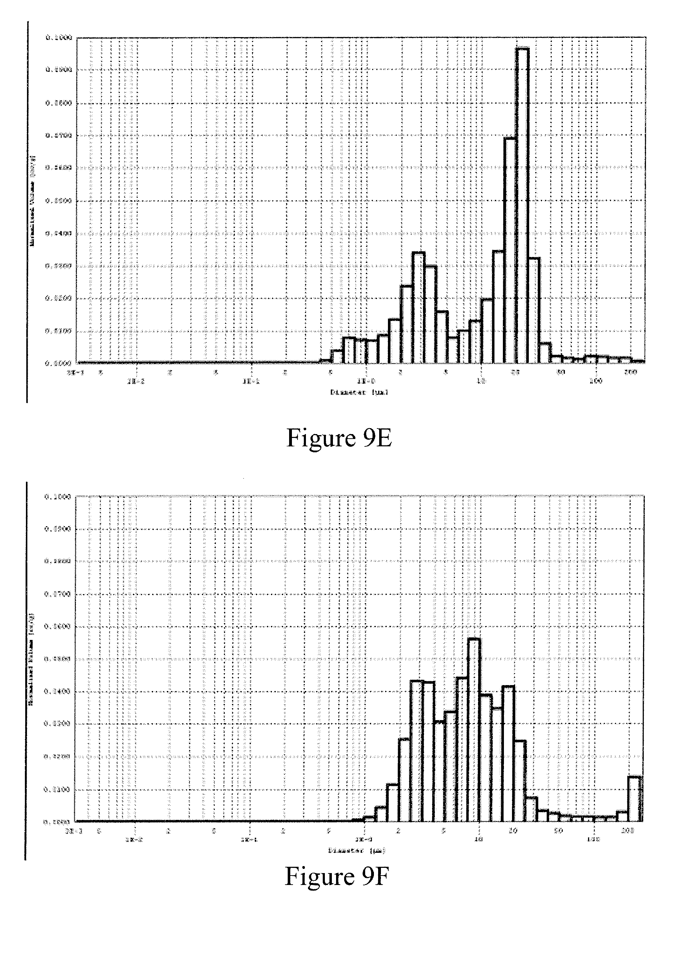

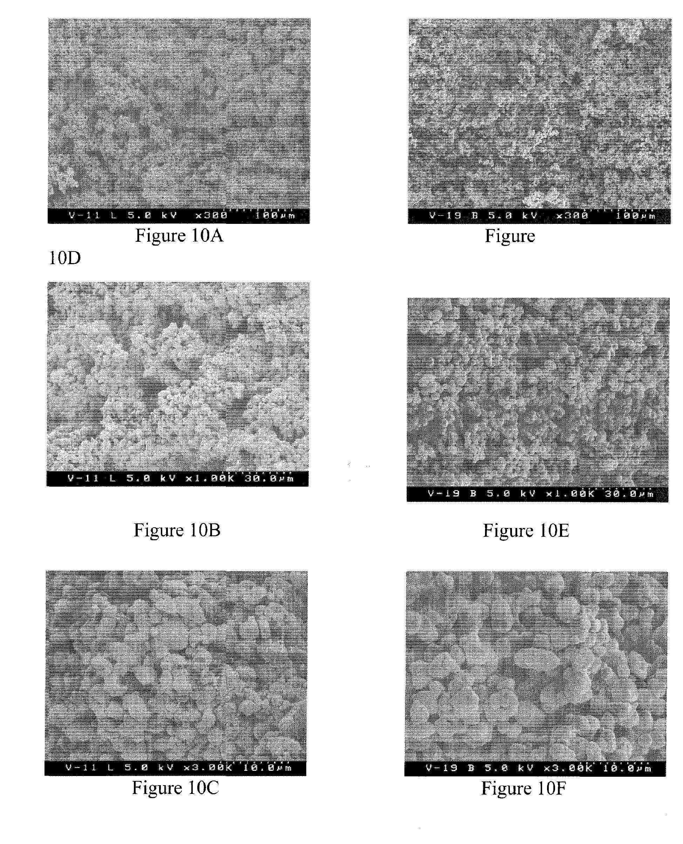

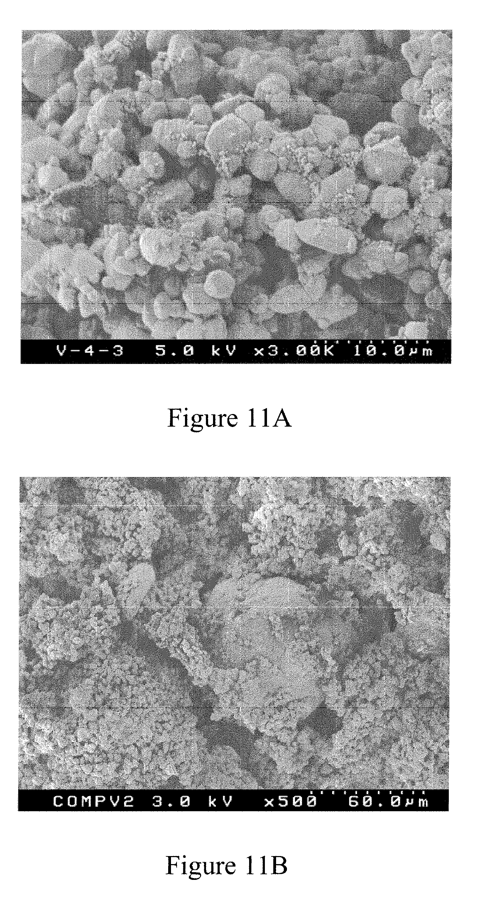

The porosities and pore volumes of the AA supports could be significantly increased by the use of fillers, such as petroleum jelly and water, and subsequent extruding, followed by sintering. Porosities and pore volumes of such AA supports were in the range of 57.3-69.8% and 0.34-0.58 cm³/g, respectively. The pore size distributions were bi-modal in all cases, with the maxima at 2-3 µm and 9-20 µm (see Figures 9A, 9B and 9E). BET surface areas were in the range of 0.6-0.9 m²/g. The crush strengths of such AA supports were 3-14 pounds (see Table V-A). This combination of properties is typical for AA supports prepared by extrusion in the presence of fillers (petroleum jelly and water) followed by sintering and differs considerably from both the AA granules and AA supports obtained by compaction and sintering. The SEM analysis confirmed uniformity of mictrostructure, i.e. very uniform grain size and bi-modal pore size distributions in all cases (see Figures 10A-10E). The SEM revealed also that the microstructure of the AA supports with all particle sizes did not significantly change after sintering, except for rounding of sharp crystallite edges and corners, indicating surface diffusion phenomena. It was found that the addition of nanosized boehmite as a binder to the extruding compositions results in strength increase from 2.8-4.4 lbs to 8-14 lbs level. However, it is important to disperse the boehmite uniformly in-between the AA crystallites, e.g.,. with nitric acid, in order to obtain such strength increase. Well-dispersed boehmite (already transformed to AA) is visible after sintering as small particles filling spaces between large AA grains (Figure 11A). Poor dispersion results in the formation of large agglomerates of undispersed boehmite (Figure 11B) and consequently no strengthening of the AA supports. In each case, increasing the sintering time and/or increasing the sintering temperature, resulted in significant increase of strength accompanied by only slight reductions of porosity, pore volume and specific surface area. Thus the optimum sintering conditions were established at 1,450°C (8 hours). Strength of the AA supports synthesized from the milled powder and sintered at 1,350°C (20 hours) was significantly higher than strengths obtained from not milled powders, which however can be ascribed to much lower porosity. In all cases, the minimum strength values are very close to the average values, which reflects very narrow distribution of strengths values (based on 5-10 samples measured), and is probably due to the very uniform microstructure originating from uniform AA powders synthesized hydrothermally.

**Table V-A. Properties of high-strength, high-porosity, unreinforced AA supports made from hydrothermally synthesized 3 µm AA powders, formed by extruding and sintered in air at 1,350-1,450°C (8-24 hrs)**

| **Composition of the AA supports*** | **Sintering Conditions** | **Porosity (%); (Median Pore Diameter (µm))** | **BET Surface Area (m²/g)** | **Total Pore Volume (cm(CDD/³/g)** | **Average (minimum) Crush Strength (pounds)** |
|---|---|---|---|---|---|
| **IV**: 3 µm (milled) AA + 21.6%W + 10.0%B + 15.0%V | 1,350°C (20 h) | 57.3% (2µm/20µm) | 0.5 | 0.34 | 12.6 (-) |
| **V:** 3 µm (as-synth.) AA + 40.4%W + 10.0%B + 24.3%V | 1,350°C (20 h) | 69.8% (3µm/10µm) | 0.7 | 0.58 | - |
| **V-2:** 3 µm (as- synth.) AA + 37.3%W + 11.3%B + 22.4%V | 1,350°C (20 h) | 67.5% (3µm/12µm) | 0.9 | 0.52 | 2.7 (-) |
| **V-3:** 3 µm (as- synth.) AA + 34.7%W + 10.5%B + 20.8%V | 1,350°C (20 h) | 67.6% (3µm/10µm) | 0.7 | 0.52 | - |
| **V-4-3:** 3 µm (as- synth.) AA + 25.7%W + 9.3%B + 0.3%N+ 18.5%V | 1,350°C (20 hrs) | 64.3% (3.5µm/10µm) | 0.69 | 0.45 | 8.3 (7.9) |
| | 1,400°C (12 hrs) | 63.9% (3.5µm/9µm) | 0.64 | 0.44 | 10.0 (8.9) |
| | 1,450°C (8 hrs) | 62.3% (3.5µm/9µm) | 0.58 | 0.41 | 13.5 (12.0) |
| **V-5:** 3 µm (as- synth.) AA + 33.5%W + 0.0%B + 20.1%V | 1,350°C (20 hrs) | 66.9% (3.5µm/10µm) | 0.57 | 0.51 | 2.8 (2.4) |
| | 1,400°C (12 hrs) | 67.1% (-) | - | 0.51 | 3.4 (2.8) |
| | 1,450°C (8 hrs) | 66.5% (3.5µm/9µm) | 0.57 | 0.50 | 4.4 (2.0) |
| **V-9:** 3 µm (as- synth.) AA + 25.7%W + 9.3%B + 0.3%N+ 23.7%V | 1,400°C (12 hrs) | 67.8% (-) | - | 0.53 | 6.7 (6.0) |
| | 1,400°C (24 hrs) | 67.9% (-) | - | 0.53 | 7.6 (6.6) |
| | 1,450°C (8 hrs) | 67.5% (-) | - | 0.52 | 8.9 (8.3) |
| **V-10:** 3 µm (as- synth.) AA + 26.7%W + 14.5%B + 0.4%N+ 24.6%V | 1,400°C (12 hrs) | 67.1% (-) | - | 0.51 | 8.0 (7.1) |
| | 1,400°C (24 hrs) | 67.3% (-) | - | 0.51 | 9.6 (8.2) |
| | 1,450°C (8 hrs) | 66.7% (3µm/20µm) | 0.6 | 0.50 | 10.9 (10.3) |
| **V-11:** 3 µm (as- synth.) AA + 25.7%W+9.3%B+ 0.5%N+ 23.7%V | 1,400°C (12 hrs) | 66.8% (-) | - | 0.50 | 9.5 (8.9) |
| | 1,400°C (24 hrs) | 66.4% (3µm/14µm) | 0.7 | 0.50 | 10.3 (9.3) |
| | 1,450°C (8 hrs) | 65.6% (3µm/14µm) | 0.7 | 0.48 | 12.4 (11.7) |
| **V-14:** 3 µm (as- synth.) AA + 26.7%W + 14.5%B + 0.8%N+ 24.6%V | 1,450°C (8 hrs) | 66.3% (3µm/15µm) | 0.6 | 0.49 | 12.1 (11.3) |
| **V-15:** 3 µm (as- synth.) AA + 27.6%W + 20.0%B + 1.1%N+ 22.7%V | 1,450°C (8 hrs) | 65.9% (3µm/20µm) | 0.6 | 0.48 | 13.8 (11.3) |

| | | | | | |
|---|---|---|---|---|---|
| * W denotes deionized H₂O, B denotes nanosized boehmite, N denotes 70% HNO₃, V denotes petroleum jelly. All concentrations are in weight % calculated with respect to the total AA powder mass. | | | | | |

High-strength, high-porosity reinforced AA supports from hydrothermally synthesized high-purity AA powders by extruding followed by sintering - effects of the reinforcements.

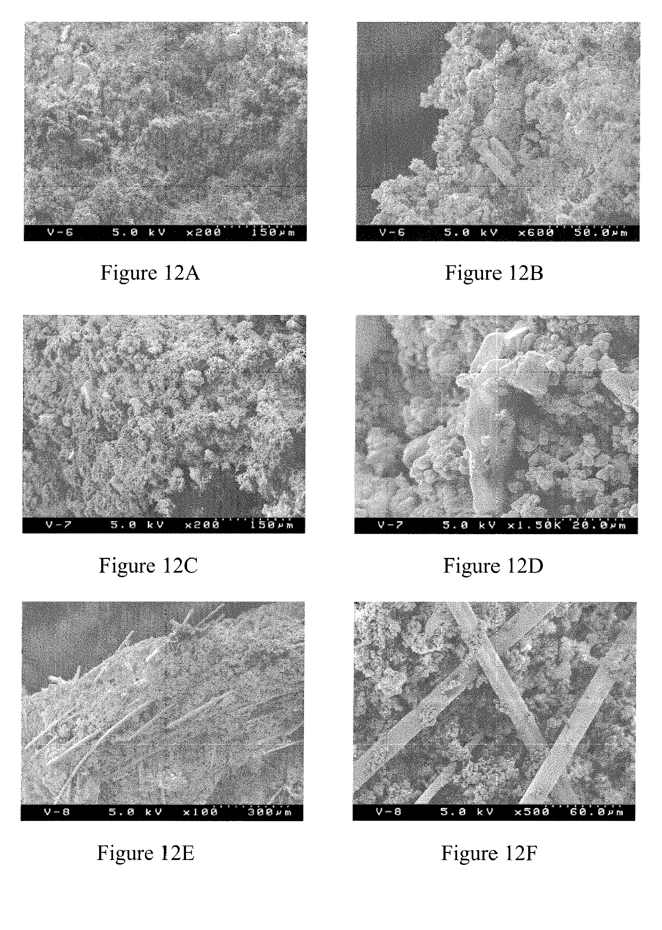

One of the methods to increase toughness and strength of ceramics is by the use of reinforcements, which can be fibers, whiskers or platelets. In the present invention, the following reinforcements were used: 10% AA platelets 20 µm in diameter, 10% AA platelets 35 µm in diameter, 3-10% Nextel 610 chopped AA fibers (10 µm diameter, <<1/8" long). Porosities and pore volumes of the obtained reinforced AA supports were in the range of 65.1-71.2% and 0.47-0.62 cm³/g, respectively. The pore size distributions were bi-modal, with the maxima at 3-5 µm and 12-20 µm. BET surface areas were 0.5-0.6 m²/g. The crush strengths were 2-10 pounds (see Table V-B). The highest strengths were obtained for the 3-10% of AA fibers, particularly when the nanosized boehmite was dispersed with nitric acid. Fracture surfaces of the reinforced AA supports exhibited clear pull-out/bridging effects of the reinforcements (platelets, fibers), which is due to the fact that the cracks did not propagate through the reinforcements, only were deflected at the porous AA matrix/ AA reinforcement (Figures 12A-12F). This phenomenon indicates that the porosity of the AA matrix is sufficiently high to deflect the cracks without introducing any foreign materials, which would act as a "weak interphase". The reinforcing particles also increased the porosity of the AA supports.

**Table V-B. Properties of high-strength, high-porosity AA supports made from hydrothermally synthesized 3 µm unmilled AA powders, reinforced with AA fibers or plates, formed by extruding, and sintered in air at 1,350-1,450°C (8-24 hrs).**

| **Composition of the AA supports*** | **Sintering Conditions** | **Porosity (%); [Median Pore Diameter (µm)]** | **BET Surface Area (m²/g)** | **Total Pore Volume (cm³/g)** | **Average (minimum) Crush Strength (pounds)** |
|---|---|---|---|---|---|
| **V-6:** 3 µm (as- synth.) AA + 41.4%W+ 12.5%B +24.9%V+11.1% WCA-25 | 1,350°C (20 hrs) | 69.9% [-] | - | 0.58 | 2.0 (1.7) |
| | 1,400°C (12 hrs) | 70.2% [-] | - | 0.59 | 2.4 (1.9) |
| | 1,450°C (8 hrs) | 69.8% [4.5µm/20µm] | 0.58 | 0.58 | 3.3 (2.2) |
| **V-7**: 3 µm (as- synth.) AA + 41.4%W + 12.5%B + 24.9 %V + 11.1% WCA-40 | 1,350°C (20 hrs) | 71.2% [-] | - | 0.62 | 1.9 (1.7) |
| | 1,400°C (12 hrs) | 69.3% [-] | - | 0.57 | 2.7 (2.0) |
| | 1,450°C (8 hrs) | 68.4% [4.5µm/19µm] | 0.58 | 0.54 | 3.4 (2.8) |
| **V-8:** 3 µm (as- synth.) AA + 41.4%W + 12.5%B + 31.8%V + 11.1% Nextel 610 | 1,350°C (20 hrs) | 68.7% [-] | - | 0.55 | 4.9 (4.5) |
| | 1,400°C (12 hrs) | 68.6% [-] | - | 0.55 | 5.7 (4.0) |
| | 1,450°C (8 hrs) | 69.3% [4µm/12µm] | 0.54 | 0.56 | 8.3 (6.8) |
| **V-12:** 3 µm (as- synth.) AA + 29.2%W + 10.6%B + 0.3%N + 26.9%V +3.4% Nextel 610 | 1,400°C (12 hrs) | 65.2% [-] | - | 0.47 | 8.0 (7.0) |
| | 1,400°C (24 hrs) | 65.5% [-] | - | 0.47 | 9.0 (7.8) |
| | 1,450°C (8 hrs) | 65.1% [3µm/15µm] | 0.51 | 0.47 | 10.2 (9.6) |

| | | | | | |
|---|---|---|---|---|---|
| * W denotes deionized H₂O, B denotes nanosized boehmite, N denotes 70% HNO₃, V denotes petroleum jelly, WCA-25 denotes AA platelets 20 µm in diameter, WCA-40 denotes AA platelets 35 µm in diameter, Nextel 610 denotes chopped AA fibers (10 µm diameter, <<1/8" long). All concentrations are in weight % calculated with respect to the total AA powder mass. | | | | | |

High-strength, high-porosity AA supports from hydrothermally synthesized high-purity AA/boehmite powders by extruding followed by sintering - effects of boehmite additions.

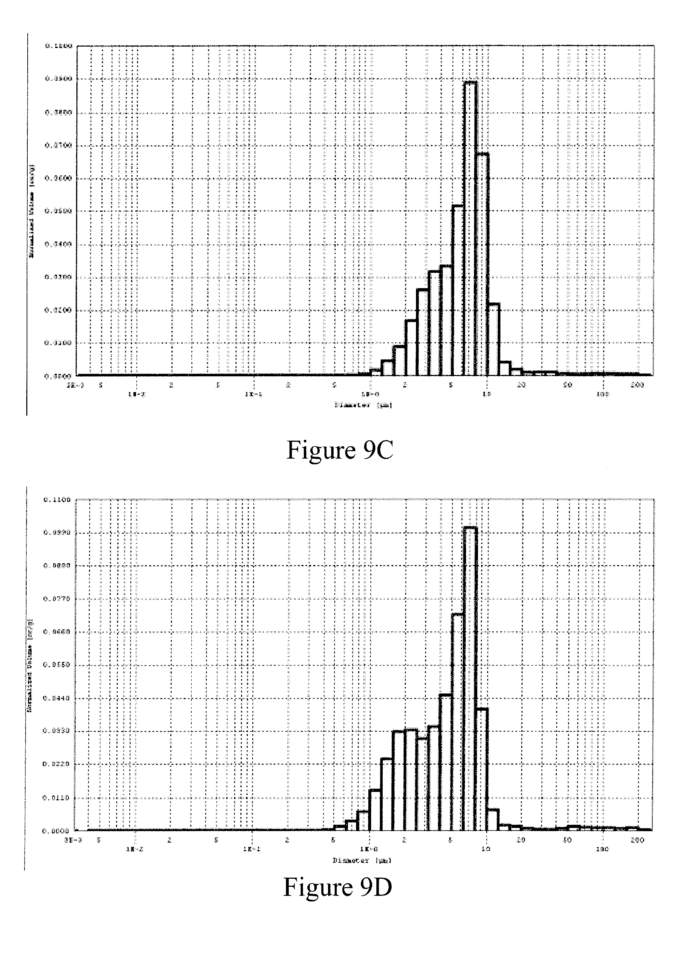

Porosities and pore volumes of the obtained AA supports obtained from the composite AA/boehmite powders were in the range of 63.6-67.4% and 0.44-0.52 cm³/g, respectively. The pore size distributions were either bi-modal, with the maxima at 2-3 µm and 7-14 µm or mono-modal, with median size around 7-10 µm (see Figures 9C, 9D, and 9F). BET surface areas were 0.35-0.50 m²/g. The crush strengths were 5-12 pounds (see Table V-C). The use of mixed AA/boehmite powders with 4-29 wt% of boehmite did increase strength almost twofold as compared to the AA powders without using the nanosized boehmite. However, the highest strengths of about 12 lbs were obtained when the nanosized boehmite dispersed with nitric acid was added to the extruding compositions. The SEM analysis confirmed uniformity of mictrostructure, i.e. very uniform grain size and pore size distributions in all cases (see Figure 10). However, the AA supports from AA/boehmite mixtures had lower fraction of large pores than the supports synthesized from AA powders, shifting the particle size distributions towards mono-modal ones (see Figs. 9 and 10). The SEM revealed also that the microstructure of the AA supports with all particle sizes did not significantly change after sintering, except for rounding of sharp crystallite edges and corners, indicating surface diffusion phenomena. In most cases, increasing the sintering time and/or increasing the sintering temperature, resulted in crush strength increase, while porosity, pore volume and specific surface area remained unchanged. The optimum sintering conditions were established at 1,450°C (8 hours).

**Table V-C. Properties of high-strength, high-porosity AA supports made from hydrothermally synthesized 3 µm unmilled AA/boehmite composite powders, formed by extruding, and sintered in air at 1,400-1,450°C (8-24 hrs).**

| **Composition of the AA supports*** | **Sintering Conditions** | **Porosity (%); [Median Pore Diameter (µm)]** | **BET Surface Area (m²**/g) | **Total Pore Volume (cm³**/g) | **Average (minimum) Crush Strength (pounds)** |
|---|---|---|---|---|---|
| **V-17:** 3 µm (as- synth.) AA/B (8.1%) +29.7%W+0.0%B + 0.0%N+ 24.5%V | 1,400°C (24 hrs) | 67.4% [-] | - | 0.52 | 5.4 (3.9) |
| | 1,450°C (8 hrs) | 67.1% [7µm] | 0.49 | 0.51 | 4.9 (2.8) |
| **V-18:** 3 µm (as- synth.) AA/B (14.6%)+29.7%W + 0.0%B + 0.0%N+ 24.5 %V | 1,400°C (24 hrs) | 64.5% [-] | - | 0.46 | 5.7 (3.5) |
| | 1,450°C (8 hrs) | 65.8% [2µm/7µm] | 0.42 | 0.48 | 6.7 (5.1) |
| **V-19:** 3 µm (as- synth.) AA/B (22.6%)+29.7%W + 0.0%B + 0.0%N+ 24.5%V | 1,400°C (24 hrs) | 64.7% [-] | - | 0.46 | 5.6 (5.1) |
| | 1,450°C (8 hrs) | 64.7% [7µm] | 0.38 | 0.46 | 7.7 (6.3) |
| **V-20:** 3 µm (as- synth.) AA/B (29.4%) + 29.7%W + 0.0%B + 0.0%N+ 24.5%V | 1,400°C (24 hrs) | 63.7% [-] | - | 0.44 | 5.8 (5.2) |
| | 1,450°C (8 hrs) | 64.4% [-] | - | 0.45 | 6.3 (5.8) |
| **V-21**: 3 µm (as- synth.) AA/B (14.6%) + 29.7%W + 0.0%B + 0.6%N+ 24.5%V | 1,400°C (24 hrs) | 67.0% [3µm/9µm] | 0.46 | 0.51 | 6.6 (5.3) |
| | 1,450°C (8 hrs) | 66.0% [3µm/9µm] | 0.35 | 0.49 | 7.1 (5.5) |
| **V-22:** 3 µm (as- synth.) AA/B (14.6%) + 25.7%W + 9.3%B + 0.5%N+ 23.7%V | 1,400°C (24 hrs) | - | - | - | - |
| | 1,450°C (8 hrs) | 64.9% [3µm/14µm] | 0.37 | 0.46 | 12.0 (10.0) |
| **V-23:** 3 µm (as- synth.) AA/B (22.6%) + 25.7%W + 9.3%B + 0.5%N+ 23.7%V | 1,400°C (24 hrs) | - | - | - | - |
| | 1,450°C (8 hrs) | 63.6% [-] | - | 0.44 | 12.3 (11.1) |

| | | | | | |
|---|---|---|---|---|---|
| * AA/B(X%) denotes AA/boehmite composite powder (mass % of boehmite in the powder), W denotes deionized H₂O, B denotes nanosized boehmite, N denotes 70% HNO₃, V denotes petroleum jelly. All concentrations are in weight % calculated with respect to the total AA/boehmite composite powder mass. | | | | | |

Effects of sintering conditions on properties of porous AA supports from hydrothermally synthesized high-purity AA powders.

It was found that irrespectively of the forming method used to prepare the AA supports (i.e. granulation, compaction, or extrusion), increasing the sintering time and/or increasing the sintering temperature in the investigated 900-1,550°C (3-24 hrs) range, resulted in significant increase of strength accompanied by only slight reductions of porosity, pore volume and specific surface area.

Porous AA supports from hydrothermally synthesized Na-, and Si-containing AA powders (undoped and Mn-doped) - effects of dopants/impurities.

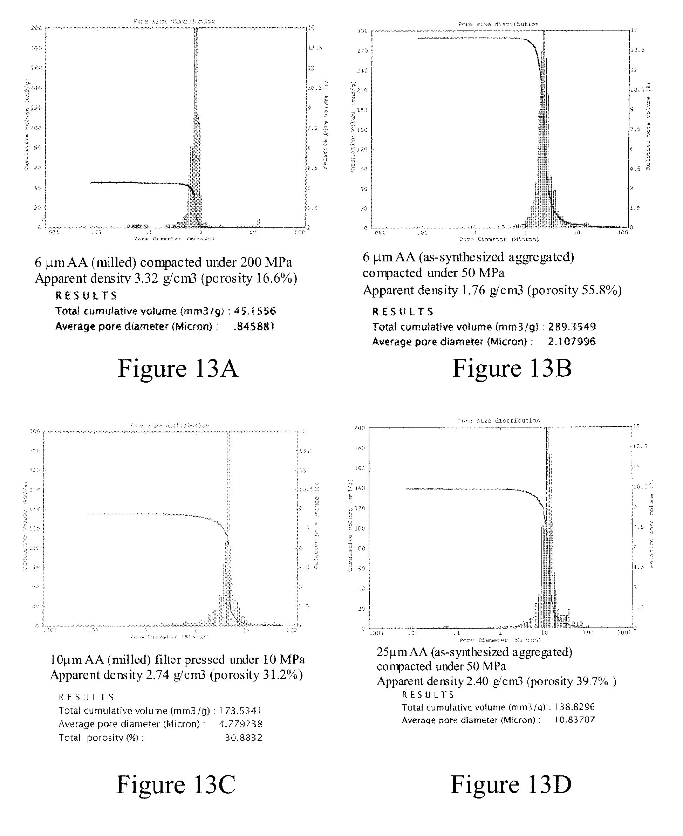

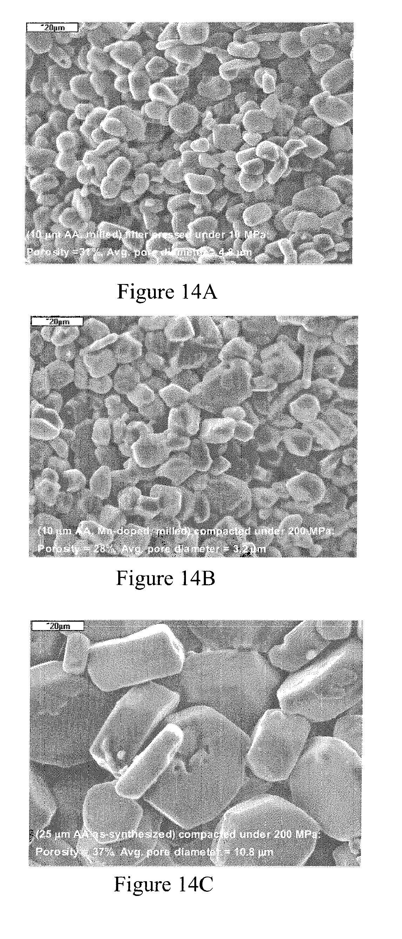

Table VI summarizes properties of all AA supports made of hydrothermally synthesized Na, Si-containing AA powders with different particle sizes, which were sintered at 1,650°C (2 h) in air. The average pore diameter in the sintered AA supports varied between 0.8 and 11 µm and total porosities varied between 10 and 56% (in most cases 20-40%). In all cases, single-modal particle size distributions were observed (see examples in Figures 13A-13D). Microstructures of the supports consisted of uniform AA primary particles clearly connected with necks during sintering (see examples in Figures 14A-14C). Powders with smaller particle sizes resulted in smaller pore diameters, also milled AA powders had smaller pore sizes than umilled ones. However, no clear relationship between compaction pressure (10-200 MPa range) and porosity/pore sizes was established here. It is thus apparent that by controlling particle sizes and levels of aggregation of AA powders, it is possible to obtain porous AA supports with porosities and pore sizes controlled in wide ranges. The sinterability of the AA powders seems to be enhanced by the presence of elevated levels of impurities/dopants, particularly Si, in addition to application of some pressure to density green compacts. No measurements of the crushing strength were performed, although the sintered AA porous supports made from Na, Si-containing AA powders exhibited sufficiently high mechanical strength for application in EO catalyst supports.

**Table VI. Properties of AA compacts made of Na, Si-containing AA powders sintered in air at 1,650°C (2 hrs).**

| **Nominal AA Particle Size (aggregation level, dopants)** | **Compacting Conditions** | **Hg Intrusion Porosimetry** | |
|---|---|---|---|
| | | **Average Pore Diameter (µm)** | **Porosity (%)** |
| 6 µm (as-synthesized aggregated) | Filter pressed under 10 MPa | 1.60 | 17.1 |
| | Uniaxial compaction under 50 MPa | 2.11 | 55.8 |
| | Uniaxial compaction under 200 MPa | 1.63 | 47.5 |
| 6 µm (milled) | Filter pressed under 10 MPa | 0.80 | 9.8 |
| | Uniaxial compaction under 50 MPa | 0.85 | 18.6 |
| | Uniaxial compaction under 200 MPa | 0.85 | 16.6 |
| 10 µm (milled) | Filter pressed under 10 MPa | 4.78 | 31.2 |
| | Uniaxial compaction under 50 MPa | 3.16 | 29.4 |
| | Uniaxial compaction under 200 MPa | 2.54 | 28.4 |
| 10 µm (milled, 0.05%Mn-doped) | Filter pressed under 10 MPa | - | - |
| | Uniaxial compaction under 50 MPa | 3.94 | 28.9 |
| | Uniaxial compaction under 200 MPa | 3.16 | 27.6 |
| 25 µm (as-synthesized aggregated) | Filter pressed under 10 MPa | - | - |
| | Uniaxial compaction under 50 MPa | 10.84 | 39.7 |
| | Uniaxial compaction under 200 MPa | 10.84 | 37.4 |

Other porous AA supports from hydrothermally synthesized AA powders.

In addition to using various types of AA/boehmite mixtures and AA reinforcements described above, AA particle mixtures with various sizes of AA crystallites, sintering additives, such as Cs salts, TiO₂ ZrO₂ SiO₂ Mg Silicate, CaSilicate, etc. can be used in order to enhance formation of AA supports with high strength, which could be utilized as EO catalyst supports.

### Specific Examples

Example 1: Hydrothermal synthesis of 40 µm AA powder.

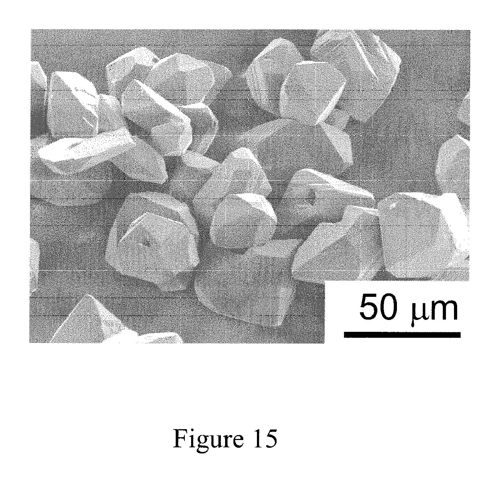

Hydrothermal synthesis of 60 lbs of 40 µm AA powder was performed as follows: Three titanium containers (12"Dia x 11"H) were cleaned and 15 lbs of DI water was added to each of them. Then, 280 g of 30% H₂O₂ aqueous solution was added to each of them and the content of each container was stirred with a spatula. Subsequently, 30 lbs of aluminum tri-hydrate Precursor Type A were added to each of the containers and stirred using drill motor stirrer to obtain uniform slurry. Each container was then closed with a lid, placed in a special steel holder (3 containers per holder), and put into cleaned autoclave (13"Dia x 120"H). 6.6 L of DI water were placed in the bottom of the autoclave. Total water content in the autoclave, including water from precursor decomposition was 41.4 L., which is 16% of the entire autoclave volume. The autoclave was then sealed using modified Bridgman-type plug and covered with insulation. Calibrated pressure gauge and two J-type thermocouples were attached. Approximately 24 hours after loading the containers, the heating cycle of the autoclave was initiated as follows: Ramp 1: from room temperature to 200°C with a heating rate of 11.7°C/hr, followed by holding at 200°C for 25 hours under 225 psi pressure, with temperature stability of a few °C; Ramp 2: 200°C - 420°C with a heating rate of 23.3°C/hr, followed by holding at 420°C for 10 days, with temperature stability of a few °C, with pressure ranging between 1,700 and 2,100 psi. During heating in Ramp 2, the pressure was relieved via the attached high-temperature valve, water-cooled heat exchanger and pressure relief valve set at 1,500 psi cracking pressure. The cracking pressure was then adjusted to 2,000 psi. The autoclave was vented after completing the heating cycle, when the temperature dropped to 400°C. After unloading, the powders were inspected by optical microscope and it was found that they consisted of 40 µm AA crystals. SEM and XRD confirmed crystal size and phase purity. Morphology of the obtained AA powders is shown in Figure 15. After discarding contaminated areas in each container (¼" from the top layer and ¼" near the liner walls and bottom), approximately 55 lbs of as -synthesized 40 µm AA powder was retrieved. The powder was then dry milled in ZrO₂-lined attritor mill (1-S, Union Process, Akron, OH) with 5 mm Al₂O₃ balls, using continuous grinding at 1 lbs/2 min feed and stirring rate of 350 rpm. The particle size distribution analysis after milling gave the following powder characteristics: D₁₀ = 24.4 µm, D₅₀ = 38.9 µm, D₉₀ = 68.1 µm. Chemical analysis of the as-synthesized powder gave the following level of impurities: Na = 85 ppm, Si < 10 ppm, Fe = 50 ppm, Ti < 10 ppm, Zr < 50 ppm, Ca = 30 ppm, Mg < 10 ppm, Cu = 10 ppm. The purity did not significantly change after milling, only Zr content increased to 60 ppm.

Example 2: Hydrothermal synthesis of 25 µm AA powder.

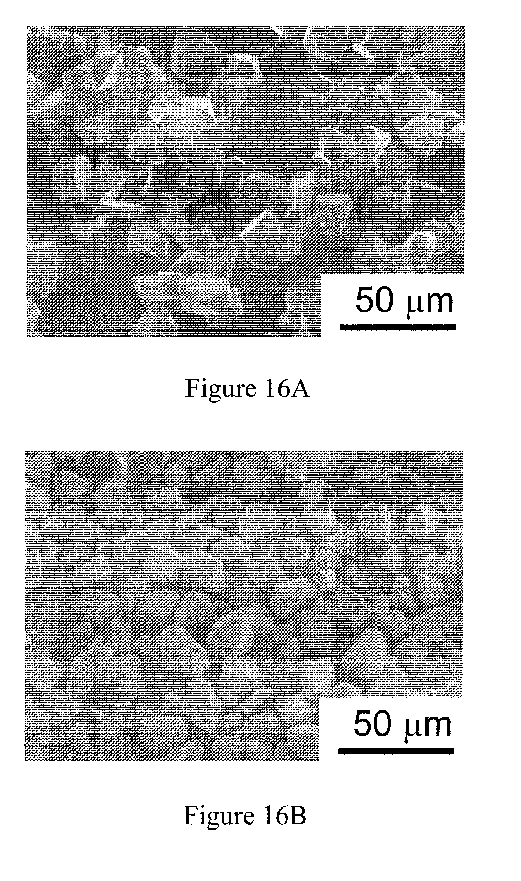

Hydrothermal synthesis of 200 lbs of 25 µm AA powder was performed as follows: Ten titanium containers (12"Dia x 11"H) were cleaned and 15 lbs of DI water was added to each of them. Then, 337 g of 30% H₂O₂ aqueous solution was added to each of them and the content of each container was stirred with a spatula. Subsequently, 30 lbs of aluminum tri-hydrate Precursor Type A were added to each of the containers and stirred using drill motor stirrer to obtain uniform slurry. 8.10 g (i.e. 0.06 wt%) of hydrothermally synthesized and milled 25 µm AA seeds were added to each container and the slurries were stirred again using drill motor stirrer for 1-2 minutes. Each container was then closed with a lid, placed in a special steel holder (5 containers per holder), and put into cleaned autoclave (13"Dia x 120"H). 3.9 L ofDI water were placed in the bottom of the autoclave. Total water content in the autoclave, including water from precursor decomposition was 116.9 L, which is 45% of the entire autoclave volume. The autoclave was then sealed using modified Bridgman-type plug and covered with insulation. Calibrated pressure gauge and two J-type thermocouples were attached. Approximately 24 hours after loading the containers, the heating cycle of the autoclave was initiated as follows: Ramp 1: from room temperature to 200°C with a heating rate of 11.7°C/hr, followed by holding at 200°C for 25 hours under 225 psi pressure, with temperature stability of a few °C; Ramp 2: 200°C - 430°C with a heating rate of 23.3°C/hr, followed by holding at 430°C for 8 days, with temperature stability of a few °C, with pressure about 1,800-2,000 psi. During heating in Ramp 2, the pressure was relieved via the attached high-temperature valve, water-cooled heat exchanger and pressure relief valve set at 1,500 psi cracking pressure. The cracking pressure was then adjusted to 2,000 psi. The autoclave was vented after completing the heating cycle, when the temperature dropped to 400°C. After unloading, the powders were inspected by optical microscope and it was found that they consisted of 25 µm AA crystals. SEM and XRD confirmed crystal size and phase purity. After discarding contaminated areas in each container (¼" from the top layer and ¼" near the liner walls and bottom), approximately 180 lbs of as-synthesized 25 µm AA powder was retrieved. The powder was then dry milled in ZrO₂-lined attritor mill (1-S, Union Process, Akron, OH) with 5mm 99.9% Al₂O₃ balls, using continuous grinding at 2 lbs/5 min feed and stirring rate of 400 rpm. The particle size distribution analysis after milling gave the following powder characteristics: D₁₀ = 13.4 µm, D₅₀ = 23.0 µm, D₉₀ = 45.9 µm. Morphologies of both as-synthesized (unmilled) and milled AA powders are shown in Figures 16A and 16B. Chemical analysis of the as-synthesized powder gave the following level of impurities: Na = 100 ppm, Si<10ppm,Fe=20ppm,Ti<10ppm,Zr<50ppm,Ca=30 ppm, Mg < 10 ppm, Cu < 10 ppm. The purity did not changed after milling, except for Zr content, originating from the wear of ZrO₂ liner, which increased to 140 ppm.

Example 3: Hydrothermal synthesis of 10 µm AA powder.

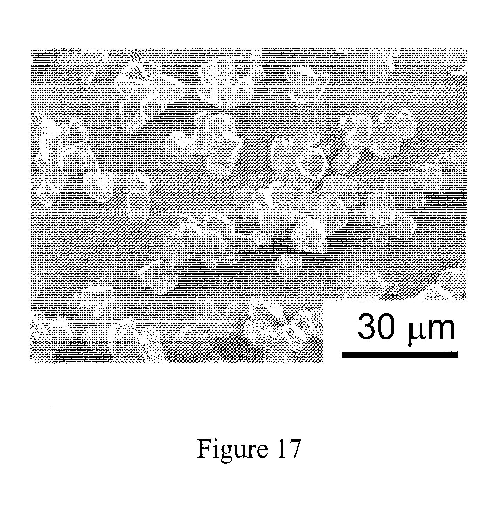

Hydrothermal synthesis of 40 lbs of 10 µm AA powder was performed as follows: Two titanium containers (12"Dia x 11"H) were cleaned and 15 lbs of DI water was added to each of them. Then, 337 g of 30% H₂O₂ aqueous solution was added to each of them and the content of each container was stirred with a spatula. Subsequently, 30 lbs of aluminum tri-hydrate Precursor Type A were added to each of the containers and stirred using drill motor stirrer to obtain uniform slurry. 67.5 g (i.e. 0.5 wt%) of hydrothermally synthesized and milled 6 µm AA seeds were added to each container and the slurries were stirred again using drill motor stirrer for 2-3 minutes. Each container was then closed with a lid, placed in a special steel holder (5 containers per holder), and put into cleaned autoclave (13"Dia x 120"H) together with 8 other containers with loads targeting different particle sizes. 1.9 L of DI water was placed in the bottom of the autoclave. Total water content in the autoclave, including water from precursor decomposition was 116.9 L., which is 45% of the entire autoclave volume. The autoclave was then sealed using modified Bridgman-type plug and covered with insulation. Calibrated pressure gauge and two J-type thermocouples were attached. Approximately 24 hours after loading the containers, the heating cycle of the autoclave was initiated as follows: Ramp 1: from room temperature to 200°C with a heating rate of 11.7°C/hr, followed by holding at 200°C for 25 hours under 225 psi pressure, with temperature stability of a few °C; Ramp 2: from 200°C to 425°C with a heating rate of 23.3°C/hr, followed by holding at 425°C for 10 days, with temperature stability of a few °C, with pressure about 1,850-2,100 psi. During heating in Ramp 2, the pressure was relieved via the attached high-temperature valve, water-cooled heat exchanger and pressure relief valve set at 1,500 psi cracking pressure. The cracking pressure was then adjusted to 2,000 psi. The autoclave was vented after completing the heating cycle, when the temperature dropped to 400°C. After unloading, the powders were inspected by optical microscope and it was found that they consisted of 10 µm AA crystals. SEM and XRD confirmed crystal size and phase purity. Morphology of the as-synthesized AA powders is shown in Figure 17. After discarding contaminated areas in each container (¼" from the top layer and ¼" near the liner walls and bottom), approximately 3 6 lbs of as-synthesized 10 µm AA powder was retrieved. The powder was then dry milled in Al₂O₃-lined attritor mill with ZrO₂ agitator arms (1-S, Union Process, Akron, OH) with 5mm 99.9% Al₂O₃ balls, using continuous grinding at 1 lbs/3.5 min feed (3 passes) and stirring rate of 400 rpm. The particle size distribution analysis after milling gave the following powder characteristics: D₁₀ = 6.5 µm, D₅₀ = 10.9 µm, D₉₀ = 18.9 µm. Chemical analysis of the as-synthesized powder gave the following level of impurities: Na = 140 ppm, Si < 10 ppm, Fe = 50 ppm, Ti < 10 ppm, Zr < 50 ppm, Ca = 60 ppm, Mg < 10 ppm, Cu < 10 ppm.

Example 4: Hydrothermal synthesis of 6 µm AA powder.

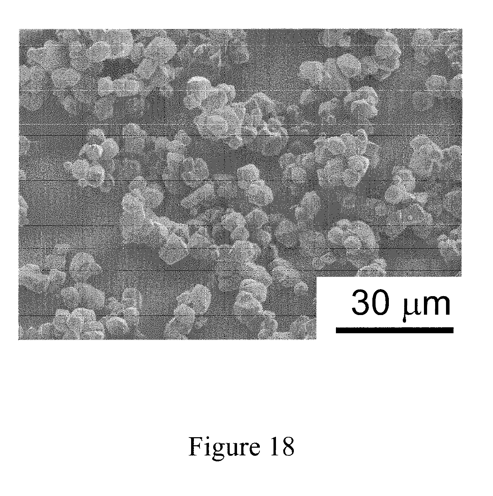

Hydrothermal synthesis of 80 lbs of 6 µm AA powder was performed as follows: Four titanium containers (12"Dia x 11"H) were cleaned and 15 lbs of DI water was added to each of them. Then, 337 g of 30% H₂O₂ aqueous solution was added to each of them and the content of each container was stirred with a spatula. Subsequently, 30 lbs of aluminum tri-hydrate Precursor Type A were added to each of the containers and stirred using drill motor stirrer to obtain uniform slurry. 405-810 g (i.e. 3-6 wt%) of hydrothermally synthesized and milled 6 µm AA seeds were added to each container and the slurries were stirred again using drill motor stirrer for 2-3 minutes. Each container was then closed with a lid, placed in a special steel holder (5 containers per holder), and put into cleaned autoclave (13"Dia x 120"H) together with 6 other containers with loads targeting different particle sizes. 1.9 L of DI water was placed in the bottom of the autoclave. Total water content in the autoclave, including water from precursor decomposition was 116.9 L., which is 45% of the entire autoclave volume. The autoclave was then sealed using modified Bridgman-type plug and covered with insulation. Calibrated pressure gauge and two J-type thermocouples were attached. Approximately 24 hours after loading the containers, the heating cycle of the autoclave was initiated as follows: Ramp 1: from room temperature to 200°C with a heating rate of 11.7°C/hr, followed by holding at 200°C for 25 hours under 225 psi pressure, with temperature stability of a few °C; Ramp 2: from 200°C to 420-425°C with a heating rate of 23.3°C/hr, followed by holding at 425°C for 10 days, with temperature stability of a few °C, with pressure about 1,850-2,100 psi. During heating in Ramp 2, the pressure was relieved via the attached high-temperature valve, water-cooled heat exchanger and pressure relief valve set at 1,500 psi cracking pressure. The cracking pressure was then adjusted to 2,000 psi. The autoclave was vented after completing the heating cycle, when the temperature dropped to 400°C. After unloading, the powders were inspected by optical microscope and it was found that they consisted of 6 µm AA crystals. SEM and XRD confirmed crystal size and phase purity. Morphology of the as-synthesized AA powders is shown in Figure 18. After discarding contaminated areas in each container (¼" from the top layer and ¼" near the liner walls and bottom), approximately 70 lbs of as-synthesized 6 µm AA powder was retrieved. The powder was then dry milled in Al₂O₃-lined attritor mill with ZrO₂ agitator arms (1-S, Union Process, Akron, OH) with 5mm 99.9% Al₂O₃ balls, using continuous grinding at 1 lbs/5 min feed (3 passes) and stirring rate of 400 rpm. The particle size distribution analysis after milling gave the following powder characteristics: D₁₀ = 3.7 µm, D₅₀= 7.2 µm, D₉₀ = 12.9 µm. Chemical analysis of the as-synthesized powder gave the following level of impurities: Na = 140 ppm, Si < 10 ppm, Fe = 40 ppm, Ti < 10 ppm, Zr < 50 ppm, Ca = 70 ppm, Mg < 10 ppm, Cu < 10 ppm.

Example 5: Hydrothermal synthesis of aqueous dispersion of 160 nm AA powder.

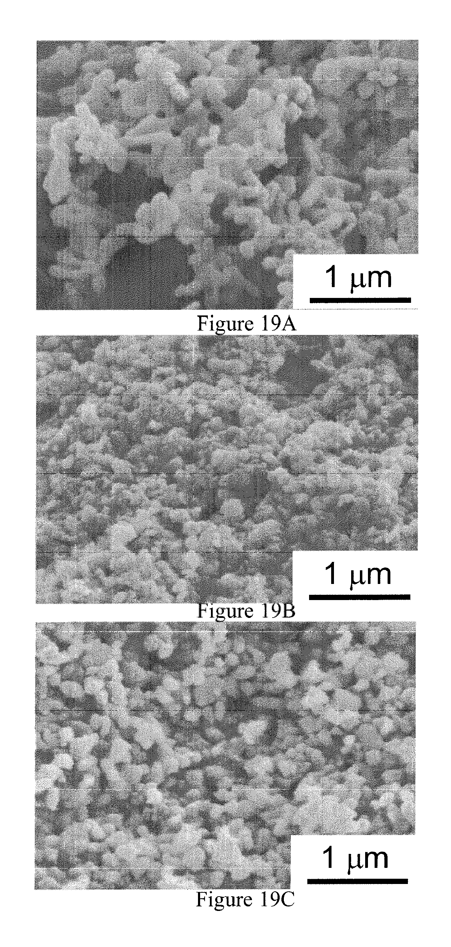

Hydrothermal synthesis of 10 lbs of 160 nm AA powder was performed as follows. One titanium container (12"Dia x 11"H) were cleaned and filled with 5.2 L of DI water. Then, 80 g of 30% H₂O₂ aqueous solution was added and the content of the container was stirred with a spatula. Subsequently, 53.14 g of 96.6% H₂SO₄ was added to yield 0.1 M concentration, and the content of the container was stirred with a spatula. Then, 15.5 lbs of aluminum tri-hydrate Precursor Type C was added to the container and stirred using drill motor stirrer to obtain uniform slurry. The container was then closed with a lid, placed in a special steel holder (1 containers per holder), and put into cleaned autoclave (13"Dia x 120"H). 1.9 L ofDI water was placed in the bottom of the autoclave. Total water content in the autoclave, including water from precursor decomposition was 9.5 L., which is 3.6% of the entire autoclave volume. The autoclave was then sealed using modified Bridgman-type plug and covered with insulation. Calibrated pressure gauge and two J-type thermocouples were attached. Approximately 24 hours after loading the containers, the heating cycle of the autoclave was initiated as follows: from room temperature to 430°C with heating rate of 9.0°C/hr, followed by holding at 430°C for 8 days, with temperature stability of a few °C, with pressure not exceeding 1,500 psi. Neither pressure relief nor venting after the synthesis were performed. After unloading, the powders were inspected by XRD and SEM and it was found that they consisted of submicron, 100-200 nm primary particles of AA. After drying in an oven at about 400°C for 48 hours, approximately 9 lbs of as-synthesized submicron AA powder was retrieved. The powder was then wet milled in horizontal mill (QC100, Union Process, Akron, OH) with stainless steel and zirconia elements and 4 mm (Y)ZrO₂ balls, using continuous circulation grinding at rotation speed of 2,640 rpm. The slurry contained the following: 900 g of the as-synthesized AA powder + 1,671 g of DI water + 1.014 g of 4 mm (Y)ZrO₂ balls + initial quantity of 12.5 g (0.75%) of ammonium polyacrylate dispersant (Colloid 286N, Kemira Chemicals, Inc., Kennesaw, GA). After 2-3 hours of continuous grinding, additional 25 g of the Colloid 286N was added (total of 37.5 g). The resulting slurry was a stable dispersion of AA in water. The particle size distribution analysis after milling gave the following powder characteristics: D₁₀ = 99 nm, D₅₀ = 162 nm, D₉₀ = 249 nm. For comparison, the as-synthesized AA powder was also dry-milled in ZrO₂-lined attritor mill (1-S, Union Process, Akron, OH) with 18 lbs of 5mm 99.9% Al₂O₃ balls, using batch grinding of 1,000 g of AA for 2 hours at a stirring rate of 430 rpm. The particle size distribution analysis after milling gave the following powder characteristics: D₁₀ = 89 nm, D₅₀ = 170 nm, D₉₀ = 1,001 nm. Morphologies of both as-synthesized (unmilled) and milled AA powders are shown in Figures 19A-19C. No chemical analysis was performed on this kind of AA.

Example 6: Hydrothermal synthesis of 100 nm µm AA powder.

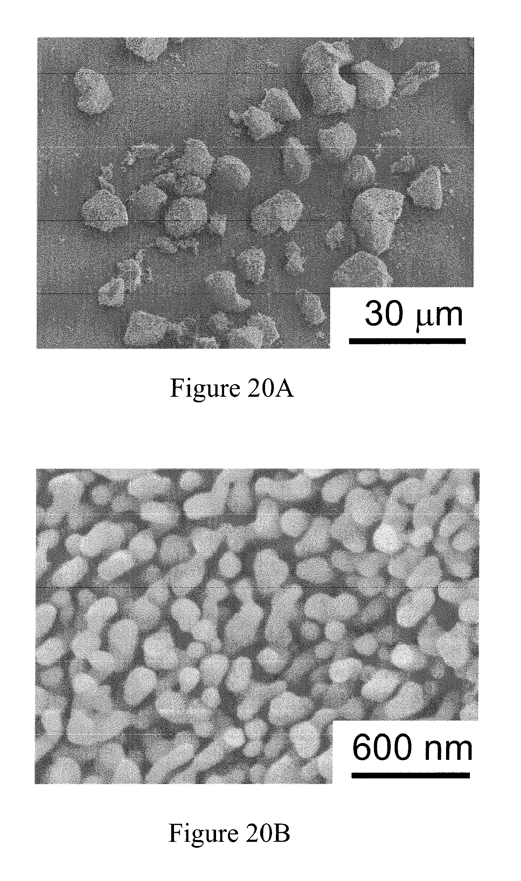

Hydrothermal synthesis of 60 lbs of 100 µm AA powder was performed as follows. Three titanium containers (12"Dia x 11 "H) were cleaned and 7.9 L of DI water was added to each of them. Then, 48.88 g of 96.6% H₂SO₄ was added to yield 0.06 M concentration and the content of the container was stirred with a spatula. Subsequently, 23.5 lbs of pure boehmite powder Disperal (Nyacol Nano Technologies, Inc., Ashland, MA) was added to the container and stirred using drill motor stirrer to obtain uniform slurry. 521 g (i.e. 5 wt%) of hydrothermally synthesized and milled 100 nm AA seeds were added to each container and the slurries were stirred again using drill motor stirrer for 2-3 minutes. Each container was then closed with a lid, placed in a special steel holder (3 containers per holder), and put into cleaned autoclave (13"Dia x 120"H). 6.6 L of DI water were placed in the bottom of the autoclave. Total water content in the autoclave, including water from precursor decomposition was 35.1 L., which is 13.4% of the entire autoclave volume. The autoclave was then sealed using modified Bridgman-type plug and covered with insulation. Calibrated pressure gauge and two J-type thermocouples were attached. Approximately 24 hours after loading the containers, the heating cycle of the autoclave was initiated as follows: from room temperature to 430°C with heating rate of 9.0°C/hr, followed by holding at 430-435°C for 9 days, with temperature stability of a few °C, with pressure around 1,500 psi. During heating ramp, the pressure was relieved via the attached high-temperature valve, water-cooled heat exchanger and pressure relief valve set at 1,000 psi cracking pressure. After unloading, the powders were inspected by XRD and SEM and it was found that they consisted of 5-20 µm aggregates of submicron, 100 nm primary particles of AA with an admix of 5Al₂O₃·H₂O (tohdite), as shown in Figures 20A and 20B. After drying in an oven at about 400°C for 48 hours, approximately 55 lbs of as -synthesized submicron AA powder was retrieved. The powder was then dry-milled in Al₂O₃-lined attritor mill (15-S, Union Process, Akron, OH) with 3/8" Al₂O₃ balls, using batch grinding (20 lbs/batch) for 90 min at a stirring rate of 185 rpm. SEM analysis after milling revealed comminuting to the primary particle size. No chemical analysis was performed on this kind of AA.

Example 7: Hydrothermal synthesis of composite 15 µm AA/boehmite powders.

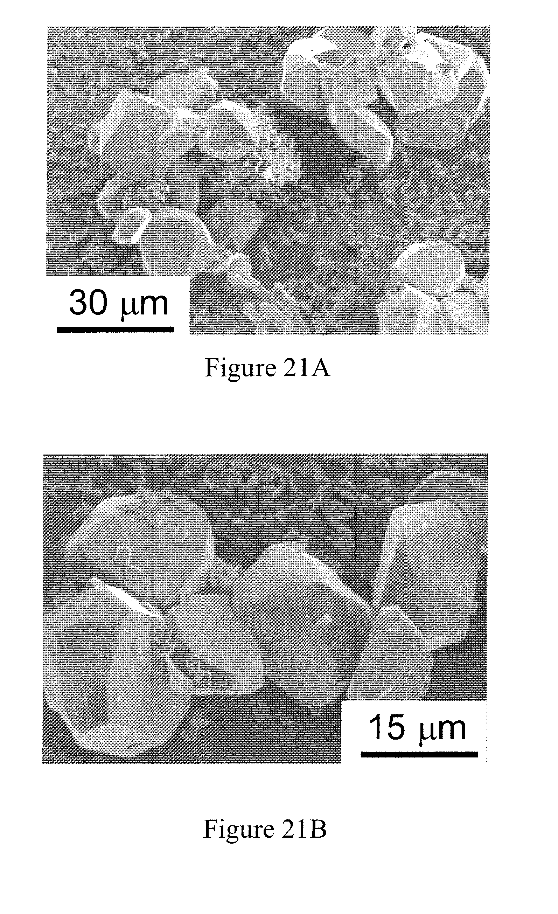

Hydrothermal synthesis of 20 g of AA/boehmite composite powders was performed as follows: Several small titanium containers (2"Dia x 4"H) were cleaned and 15.0 g of DI water was added to each of them. Subsequently, 30.0 g of aluminum tri-hydrate Precursor Type A or Precursor Type B were added and content of each container was stirred using spatula to obtain uniform slurry. The containers were then closed with lids, placed in special steel holders and put into two cleaned autoclaves (13"Dia x 120"H), together with several other small containers with loads targeting different types of AA powders. 19.5 L of DI water were placed in the bottom of Autoclave 1. Total water content in Autoclave 1, including water from precursor decomposition was 20.0 L., which is 7.7% of the entire autoclave volume. 6.5 L of DI water were placed in the bottom of Autoclave 2. Total water content in Autoclave 2, including water from precursor decomposition was 7.0 L., which is 2.7% of the entire autoclave volume. The autoclaves were then sealed using modified Bridgman-type plugs and covered with insulation. Calibrated pressure gauge and two J-type thermocouples were attached to each of the autoclaves. Approximately 24 hours after loading the containers, the heating cycle of the autoclaves was initiated as follows. Autoclave 1: Ramp 1: from room temperature to 270°C with a heating rate of 11.7°C/hr, followed by holding at 270°C for 24 hours under 800 psi pressure, with temperature stability of a few °C; Ramp 2: 270°C - 410°C with a heating rate of 9.0°C/hr, followed by holding at 410°C for 7 days, with temperature stability of a few °C, with pressure about 1,550 psi. Autoclave 2: Ramp 1: from room temperature to 200°C with a heating rate of 11.7°C/hr, followed by holding at 200°C for 24 hours under 225 psi pressure, with temperature stability of a few °C; Ramp 2: 200°C - 380°C with a heating rate of 9.0°C/hr, followed by holding at 380°C for 4 days, with temperature stability of a few °C, with pressure about 1,200 psi. Neither pressure relief nor venting after the synthesis were performed in any case. After unloading, the powders were inspected by optical microscope and it was found that they consisted of various mixtures of AA and boehmite crystals. Based upon subsequent SEM and XRD evaluation, powders synthesized in Autoclave 1 were approximately a 50/50 mix of AA (about 15 µm crystal size) and boehmite (2-3 µm), as shown in Figures 21A and 21B. Powders synthesized in Autoclave 2 were mostly boehmite, with traces of the AA phase. No chemical analysis was performed on these types of powders.

Example 8: Hydrothermal synthesis of composite 3 µm AA/boehmite powders with precisely controlled boehmite content.

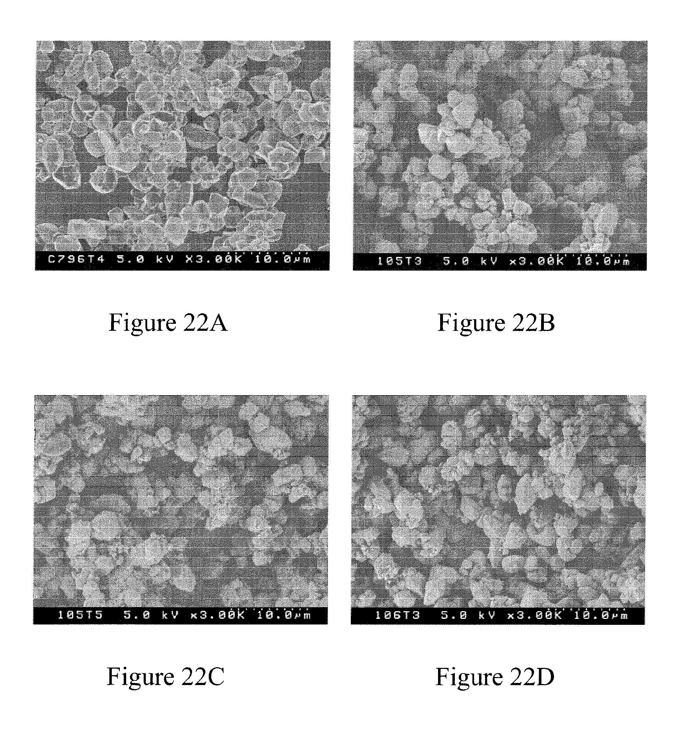

Hydrothermal synthesis of 8 batches (20 lbs per batch, total of 160 lbs) of 3 µm AA/boehmite powders with various boehmite contents was performed as follows: Eight titanium containers (12"Dia x 11"H) were cleaned and 15 lbs of DI water was added to each of them. Then, 337 g of 30% H₂O₂ aqueous solution was added to each of them and the content of each container was stirred with a spatula. Subsequently, 30 lbs of aluminum tri-hydrate Precursor Type A were added to each of the containers and stirred using drill motor stirrer to obtain uniform slurry. Subsequently, 405 g, 810 g, or 1,215 g of commercial AA seeds (types A or B) were added to each container in order to yield respectively 3.0 wt%, 6.0 wt%, or 9.0 wt% concentration of seeds. Then, the slurries were stirred again using drill motor stirrer for about 5 minutes. Each container was then closed with a lid, placed in a special steel holder (4 containers per holder), and put into two cleaned autoclaves (13"Dia x 120"H), 4 containers per autoclave. 5.7 L of DI water were placed in the bottom of each autoclave. Total water content in each autoclave, including water from precursor decomposition, was 50.9 L, which is 20% of the entire autoclave volume. Both autoclaves were then sealed using modified Bridgman-type plug and covered with insulation. Calibrated pressure gauge and two J-type thermocouples were attached to each autoclave. Approximately 24 hours after loading the containers, the heating cycle of the autoclaves was initiated as follows: Ramp 1: from room temperature to 200°C with a heating rate of 11.7°C/hr, followed by holding at 200°C for 25 hours under 225 psi pressure, with temperature stability of a few °C; Ramp 2: 200°C - 400°C with a heating rate of 23.3°C/hr, followed by holding at 400°C for 14 hours (one autoclave) or 20 hours (another autoclave), with temperature stability of a few °C, with pressure about 2,000 psi. During heating in Ramp 2, the pressure was relieved from each autoclave via the attached high-temperature valve, water-cooled heat exchanger and pressure relief valve set at 1,500 psi cracking pressure. The cracking pressure was then adjusted to 2,000 psi in each autoclave. Both autoclaves were vented after completing the heating cycle, when the temperature dropped below 400°C. After unloading, the powders were inspected by optical microscope and it was found that each of 8 synthesized batches consisted of 3 µm crystals. SEM (Figures 22A-22D) and XRD (Figures 6A and 6B) confirmed crystal size and phase compositions of the AA/boehmite mixtures in each batch. In order to calculate boehmite content in each batch, 5-50 g samples of AA/boehmite powders taken from each batch were calcined in air at 800-1,000°C for 4-20 hours. The boehmite contents in the samples were 0.0, 4.4, 8.1, 22.6, 29.4, 40.4, 54.3, and 73.2 wt% (Figures 6A and 6B) and were calculated from the weight loss due to water evolution during calcination (stoichiometric transformation of AlOOH into Al₂O₃ was assumed in the calculations). After discarding contaminated areas in each container (¼" from the top layer and ¼" near the liner walls and bottom), a total of approximately 140 lbs of as-synthesized 3 µm AA/boehmite powders was retrieved. Chemical analysis of several different as-synthesized AA/boehmite powders gave the following ranges of impurities: Na = 80-140 ppm, Si < 10 ppm, Fe = 10-30 ppm, Ti = 20-30 ppm, Zr < 50 ppm, Ca = 20-60 ppm, Mg < 10 ppm, Cu < 10 ppm.

Example 9: Fabrication of porous AA supports (granules) from hydrothermally synthesized high-purity AA powders.

As-synthesized aggregates of AA powders with 4 different nominal median particle sizes: 3 µm, 6 µm (see Example 4), 8 µm, and 10 µm (see Example 3) were sieved using 1.0 mm and 1.5 mm stainless steel sieves (Wal-Mart Inc.). The purpose of this procedure was to separate a fraction of larger AA aggregates and/or AA granules with sizes in the range of 1.0-1.5 mm. No binders or other additives were added to the AA powders. No external pressure was applied to increase packing density of the AA granules. Subsequently, 3-30 g of the AA granules were placed in Al₂O₃ crucibles and heat-treated in a laboratory furnace with MoSi₂ heating elements at 900°C (8 h), 1,400°C (4 h), and 1,550°C (3 h) in air atmosphere. The heating rate was 10°C/min in all cases. After the heat treatment, apparent crushing strength of the AA granules increased, and this increase was more strongly pronounced at higher temperatures and in granules containing smaller AA crystallites. No measurements of the crushing strength were performed. Porosities and microstructures of all green and selected heat-treated AA granules were analyzed using SEM, 40-point nitrogen adsorption isotherm, and mercury intrusion porosimetry. Results of the analysis are summarized in Table III. The median pore diameter in green granules varied between 4 and 14 µm and increased proportionally to the increasing nominal particle size. In most cases, single-modal particle size distributions were observed (Figures 7A and 7B). The heat treatment at 1,400°C (4 h) did not reduce the pore diameter of the granules, despite some increase of mechanical strength and reduction of the BET surface area. SEM analysis confirmed this finding. The SEM revealed also that the microstructure of the granules with all particle sizes did not significantly change after calcination even at 1,550°C (3 h), except the 3 µm particle size, where rounding of sharp crystallite edges and corners was observed, indicating surface diffusion phenomena. The obtained variety of AA granules could be used as AA supports for EO catalysts.

Example 10. Fabrication of high-strength, high-porosity AA supports from hydrothermally synthesized high-purity AA powders by powder compaction followed by sintering.

Both unmilled (as-synthesized) and milled AA powders with nominal median particle sizes of 3 µm and 4 µm, all synthesized hydrothermally, were used as starting materials in the preparation of high-strength, high-porosity AA supports. In order to form cylindrical pellets, the powders were compacted in steel die with diameter of 17.89 mm under various compaction pressures, with or without any additives, and subsequently sintered in air in Superkanthal 1900 furnace with MoSi₂ heating elements. Heating rates were 6°C/min in all cases. The samples were cooled in an uncontrolled manner together with the furnace. All pellets sintered at 1,400°C (5-20 hrs) were compacted without any additives by uniaxial pressing under 5 MPa (700 psi). All pellets sintered at 1,350°C (5 hrs) were compacted in the presence of 5 wt% of 5% aqueous solution of polyvinyl alcohol (PVA) by uniaxial pressing under 2 MPa (280 psi). The height/diameter ratio for all compacts was about 0.7. Relative densities and porosities of all sintered AA supports were measured from the dimensions and corresponding masses (the average values were calculated from measuring 10 pellets). Median pore diameters and total pore volumes were obtained from the mercury porosimetry measurements. BET surface areas were measured for both the starting AA powders and the sintered AA supports. Compressive strengths of all AA carriers were measured using Zwick equipment in the direction parallel to the pellet axis. The preparation conditions together with properties measured are summarized in Table IV. Linear shrinkages (measured from the pellet diameters) of 3 µm and 4 µm powders sintered at 1350°C (5h) were 1.4% and 0.7%, respectively. The porosities of the AA supports ranged from 35% to 58%, median pore diameters varied between 1.2 µm and 5.5 µm, BET surface areas were 0.24-0.80 m²/g. Obtained compressive strength ranged between 6 and 110 MPa. All pore size distributions were basically single-modal (3 µm as-synthesized powder sintered at 1400°C for 5 h may be an exception), the SEM analysis confirmed uniformity of mictrostructure, i.e. very uniform grain size and pore size distributions in all cases (Figures 8A-8C). The obtained variety of high-strength, high-porosity AA ceramics could be used as AA supports for EO catalysts.

Example 11. Fabrication of high-strength, high-porosity unreinforced AA supports from hydrothermally synthesized high-purity AA powders by extruding followed by sintering.

Hydrothermally synthesized AA powders with nominal median particle size of 3 µm (both milled and unmilled, i.e. as-synthesized) were used as starting material in the preparation of high-strength, high-porosity AA supports. In order to prepare extruding pastes, the AA powders were mixed with DI water, nanosized boehmite powder, and petroleum jelly using low stirring speed stainless steel blender. First, 0-180 g of nanosized boehmite powder (Disperal, Nyacol Nanotechnologies, Ashland, MA) were added to 195-298 g of DI water and stirred vigorously for 0-40 min. In some cases, 2.6-10.3 g (2-4% of boehmite mass) of 70% HNO₃ was added to the DI water prior to adding the boehmite powder, in order to disperse well the boehmite particles. Subsequently, 738-965 g of milled or unmilled AA powder with 3 µm nominal crystallite size were added to the boehmite dispersion. The AA powders were typically added in 2 steps: first 500-570 g was added under vigorous blending, then 135-229 g of pure petroleum jelly was added, and finally the remainder of the AA powder was added under vigorous blending. The extruding paste was then transferred into 2" diameter, 5 hp, stainless steel extruder with slotted auger and jacketed grooved pin barrel (Model No. 2"W/PKR, The Bonnot Company, Uniontown, OH), which operated at low speeds of 15-30 rpm. The extruded pieces were cut to the desired lengths, and left to dry under infrared heat lamp(s) for at least 30 min. In order to remove the remaining water and burn out the organic binder, the pre-dried extrudate pieces were placed in a laboratory oven and heated in flowing air from the room temperature to 200°C with a soaking time at peak temperature of several hours and heating rate of 10°C/hr. The pre-fired extrudate pieces were then transferred into a furnace with MoSi₂ heating elements (Carbolite, Model RHF17/10M) and sintered in air at temperatures between 1,350-1450°C for 8-24 hours. The heating rate was 2.0°C/min in all cases; the furnace was cooled down to the room temperature in an uncontrolled manner. Porosities and pore volumes of the obtained AA supports were in the range of 57.3-69.8% and 0.34-0.58 cm³/g, respectively. The pore size distributions were bi-modal, with the maxima at 2-3 µm and 9-20 µm (Figure 9A). BET surface areas were 0.6-0.9 m²/g. The crush strengths were 3-14 pounds (see Table V-A).

Example 12. Fabrication of high-strength, high-porosity reinforced AA supports from hydrothermally synthesized high-purity AA powders by extruding followed by sintering.

Hydrothermally synthesized AA powder with nominal median particle size of 3 µm (unmilled, i.e. as-synthesized) was used as starting material in the preparation of high-strength, high-porosity reinforced AA supports. In order to prepare extruding paste, the AA powder was mixed with DI water, nanosized boehmite powder, reinforcement, and petroleum jelly using low stirring speed stainless steel blender. First, 90 g of nanosized boehmite powder (Disperal, Nyacol Nanotechnologies, Ashland, MA) were added to 248-298 g ofDI water and stirred vigorously for 0-40 min. In some cases, 2.6-7.7 g (2-4% of boehmite mass) of 70% HNO₃ was added to the DI water prior to adding the boehmite powder, in order to disperse well the boehmite particles. Then, various reinforcements, such as 80 g (10 wt% of the total AA phase) of two different types of AA platelets (20 µm diameter - WCA-25, 35 µm diameter WCA-40, both Micro Abrasives Co., Westfield, MA) or 29-80 g (3-10 wt% of the total AA phase) of chopped AA fibers (10 µm diameter, <<1/8" long - Nextel 610, 3M) were added to the slurry, which was subsequently stirred for 5-120 min. Subsequently, 720-850 g of unmilled AA powder with 3 µm nominal crystallite size was added to the boehmite and reinforcement dispersion. The AA powder was typically added in 2 steps: first 320-500 g was added under vigorous blending, then 179-229 g of pure petroleum jelly was added, and finally the remainder of the AA powder was added under vigorous blending. The only exceptions to this procedure were the compositions with the Nextel 610 fibers, which required adding the petroleum jelly before adding any of the AA powder. The extruding paste was then transferred into 2" diameter, 5 hp, stainless steel extruder with slotted auger and jacketed grooved pin barrel (Model No. 2"W/PKR, The Bonnot Company, Uniontown, OH), which operated at low speeds of 15-30 rpm. The extruded pieces were cut to the desired lengths (compositions with the Nextel 610 fibers had to be broken by hand because the fiber reinforcement did not allow cutting), and left to dry under infrared heat lamp(s) for at least 30 min. In order to remove the remaining water and burn out the organic binder, the pre-dried extrudate pieces were placed in a laboratory oven and heated in flowing air from the room temperature to 200°C with a soaking time at peak temperature of several hours and heating rate of 10°C/hr. The pre-fired extrudate pieces were then transferred into a furnace with MoSi₂ heating elements (Carbolite, Model RHF17/10M) and sintered in air at temperatures between 1,350-1450°C for 8-24 hours. The heating rate was 2.0°C/min in all cases; the furnace was cooled down to the room temperature in an uncontrolled manner. Porosities and pore volumes of the obtained AA supports were in the range of 65.1-71.2% and 0.47-0.62 cm³/g, respectively. The pore size distributions were bi-modal, with the maxima at 3-5 µm and 12-20 µm. BET surface areas were 0.5-0.6 m²/g. The crush strengths were 2-10 pounds (see Table V-B).

Example 13. Fabrication of high-strength, high-porosity AA supports from hydrothermally synthesized high-purity composite AA/boehmite powders.

Hydrothermally synthesized AA/boehmite composite powders with nominal median particle size of 3 µm (unmilled, i.e. as-synthesized), which contained 8.1, 14.6, 22.6, and 29.4 wt% of boehmite, were used as starting materials in the preparation of high-strength, high-porosity AA supports. In order to prepare extruding paste, the AA/boehmite powders were mixed with DI water, petroleum jelly, and occasionally with nanosized boehmite powder, using low stirring speed stainless steel blender. First, 0-90 g of nanosized boehmite powder (Disperal, Nyacol Nanotechnologies, Ashland, MA) were added to 248-278 g of DI water and stirred vigorously for 0-40 min. In some cases, 5.2 g (4% of boehmite mass) of 70% HNO₃ were added to the DI water prior to adding the boehmite powder, in order to disperse well the boehmite particles (in one case, the HNO₃ was added without adding the nanosized boehmite). Subsequently, 935-965 g of unmilled AA/boehmite powders with 3 µm nominal crystallite size and various boehmite contents, were added to the boehmite dispersion. The AA/boehmite powders were typically added in 2 steps: first 450-570 g was added under vigorous blending, then 229 g of pure petroleum jelly was added, and finally the remainder of the AA/boehmite powder was added under vigorous blending. The extruding paste was then transferred into 2" diameter, 5 hp, stainless steel extruder with slotted auger and jacketed grooved pin barrel (Model No. 2"W/PKR, The Bonnot Company, Uniontown, OH), which operated at low speeds of 15-30 rpm. The extruded pieces were cut to the desired lengths, and left to dry under infrared heat lamp(s) for at least 30 min. In order to remove the remaining water and burn out the organic binder, the pre-dried extrudate pieces were placed in a laboratory oven and heated in flowing air from the room temperature to 200°C with a soaking time at peak temperature of several hours and heating rate of 10°C/hr. The pre-fired extrudate pieces were then transferred into a furnace with MoSi₂ heating elements (Carbolite, Model RHF17/10M) and sintered in air at temperatures between 1,400-1450°C for 8-24 hours. The heating rate was 2.0°C/min in all cases; the furnace was cooled down to the room temperature in an uncontrolled manner. Porosities and pore volumes of the obtained AA supports were in the range of 63.6-67.4% and 0.44-0.52 cm³/g, respectively. The pore size distributions were bi-modal, with the maxima at 2-3 µm and 7-14 µm. BET surface areas were 0.35-0.50 m²/g. The crush strengths were 5-12 pounds (see Table V-C).

Example 14: Hydrothermal synthesis of manganese-doped 10 µm AA powder.

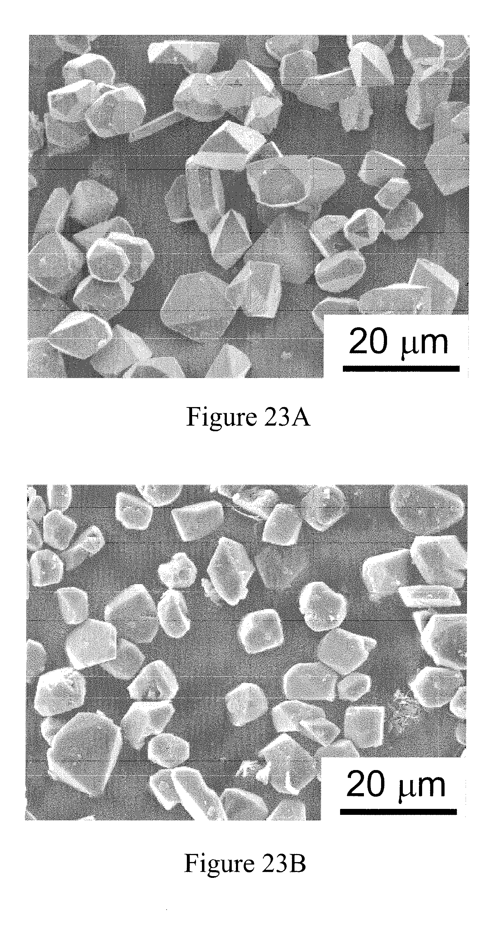

Hydrothermal synthesis of 8 lbs of 10 µm AA powder doped with 0.05 wt% of manganese was performed as follows. One titanium container (12"Dia x 11"H) was cleaned and filled with 8 lbs of DI water. Then, 5.049 g of KMnO₄ powder was added and the content of the container was stirred in order to obtain homogeneous solution. Subsequently, 12 lbs of aluminum tri-hydrate Precursor Type C were added to the container and stirred using drill motor stirrer to obtain uniform slurry. The container was then closed with a lid, placed in a special steel holder (1 containers per holder), and put into cleaned autoclave (13"Dia x 120"H). 6.5 L ofDI water were placed in the bottom of the autoclave. Total water content in the autoclave, including water from precursor decomposition was 12.7 L, which is 5% of the entire autoclave volume. The autoclave was then sealed using modified Bridgman-type plug and covered with insulation. Calibrated pressure gauge and two J-type thermocouples were attached. Approximately 24 hours after loading the containers, the heating cycle of the autoclave was initiated as follows: Ramp 1: from room temperature to 200°C with a heating rate of 11.7°C/hr, followed by holding at 200°C for 24 hours under 225 psi pressure, with temperature stability of a few °C; Ramp 2: from 200°C to 410°C with a heating rate of 9.0°C/hr, followed by holding at 410°C for 8 days, with temperature stability of a few °C, with pressure about 1,600 psi. Neither pressure relief nor venting after the synthesis was performed. After unloading, the powders were inspected by optical microscope and it was found that they consisted of 10 µm AA crystals. SEM and XRD confirmed crystal size and phase purity. After drying in an oven at about 300°C for 48 hours and discarding contaminated areas in the container, approximately 7 lbs of as-synthesized 10 µm manganese-doped AA powder was retrieved. The powder was then divided into several batches, and each batch was wet milled using custom-made polyethylene-lined attritor-type mill with ZrO₂ agitator arms and 2 mm ZrO₂ balls, and stirring rate of 800 rpm. The slurry in each batch contained the following: 200 g of the as-synthesized manganese-doped AA powder + 120 g of DI water + 2,000 g of 2 mm (Y)ZrO₂ balls. The milling time of each batch was 7 min. The particle size distribution analysis after milling gave the following powder characteristics: D₁₀ = 5.8 µm, D₅₀ = 11.5 µm, D₉₀ = 19.5 µm. Morphologies of both as-synthesized (unmilled) and milled AA powders are shown in Figures 23A and 23B. Chemical analysis of the as-synthesized powder gave the following level of impurities: Na = 0.060%, Si = 0.032%, Fe = 60 ppm, Ti < 10 ppm, Mn = 0.05%, Mg < 10 ppm, Cu < 10 ppm.

Example 15: Hydrothermal synthesis of chromium-doped 3 µm AA powder.

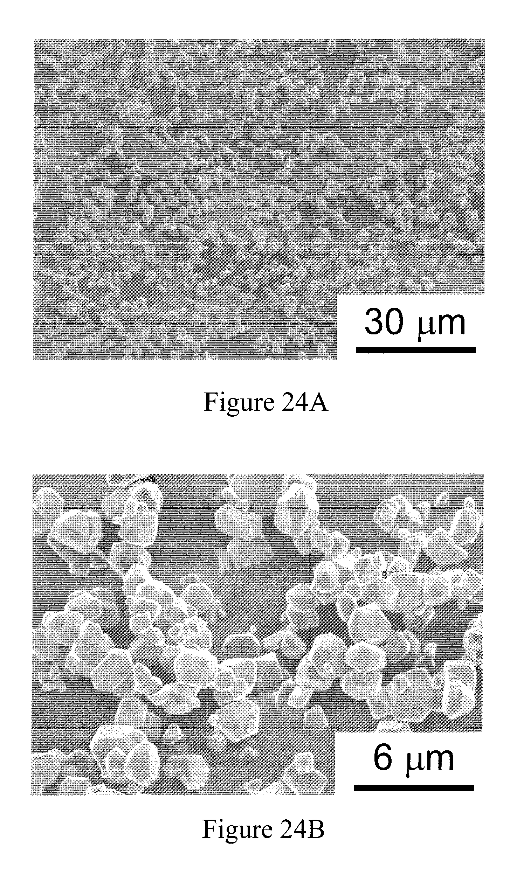

Hydrothermal synthesis of 9 lbs of 3 µm AA powder doped with 0.01 wt% of chromium (Cr³⁺) was performed as follows. One titanium container (12"Dia x 11"H) was cleaned and filled with 10 lbs of DI water. Then, 2.261 g of CrCl₃·6H₂O powder was added and the content of the container was stirred in order to obtain homogeneous solution. Subsequently, 13.5 lbs of aluminum tri-hydrate Precursor Type C were added to the container and stirred using drill motor stirrer to obtain uniform slurry. Then, 135.0 g (i.e. 2.2 wt%) of commercially available AA seeds (AKP-50, Sumitomo Chemical) were added to the container and the slurry was stirred again using drill motor stirrer for 10 minutes. The container was then closed with a lid, placed in a special steel holder (1 containers per holder), and put into cleaned autoclave (13"Dia x 120"H). 2.8 L ofDI water were placed in the bottom of the autoclave. Total water content in the autoclave, including water from precursor decomposition was 7.4 L., which is 3% of the entire autoclave volume. The autoclave was then sealed using modified Bridgman-type plug and covered with insulation. Calibrated pressure gauge and two J-type thermocouples were attached. Approximately 24 hours after loading the containers, the heating cycle of the autoclave was initiated as follows: Ramp 1: from room temperature to 200°C with a heating rate of 11.7°C/hr, followed by holding at 200°C for 23 hours under 225 psi pressure, with temperature stability of a few °C; Ramp 2: from 200°C to 410°C with a heating rate of 9.0°C/hr, followed by holding at 410°C for 6 days, with temperature stability of a few °C, with pressure about 1,000 psi. Neither pressure relief nor venting after the synthesis was performed. After unloading, the powders were inspected by optical microscope and it was found that they consisted of 3 µm AA crystals. SEM and XRD confirmed crystal size and phase purity. Morphology of the as-synthesized (unmilled) AA powder is shown in Figures 24A and 24B. After drying in an oven at about 300°C for 48 hours and discarding contaminated areas in the container, approximately 8 lbs of as-synthesized 3 µm chromium-doped AA powder was retrieved. The powder was then divided into several batches, and each batch was wet milled in Teflon-lined attritor mill with ZrO₂ agitator arms (1-S, Union Process, Akron, OH) with 5mm (Y)ZrO₂ balls, and stirring rate of 350 rpm. The slurry in each batch contained the following: 1,400 g of the as-synthesized chromium-doped AA powder + 2,000 g ofDI water + full load of 5 mm (Y)ZrO₂ balls. The milling time of each batch was 35 min. The particle size distribution analysis after milling gave the following powder characteristics: D₁₀ = 1.8 µm, D₅₀ = 3.3 µm, D₉₀ = 5.3 µm. Chemical analysis of the as-synthesized powder gave the following level of impurities: Na = 0.060%, Si = 0.028%, Fe = 60 ppm, Ti < 10 ppm, Cr = 0.01%, Mg < 10 ppm, Cu < 10 ppm.

Example 16: Hydrothermal synthesis of manganese-doped 250 nm AA powder.

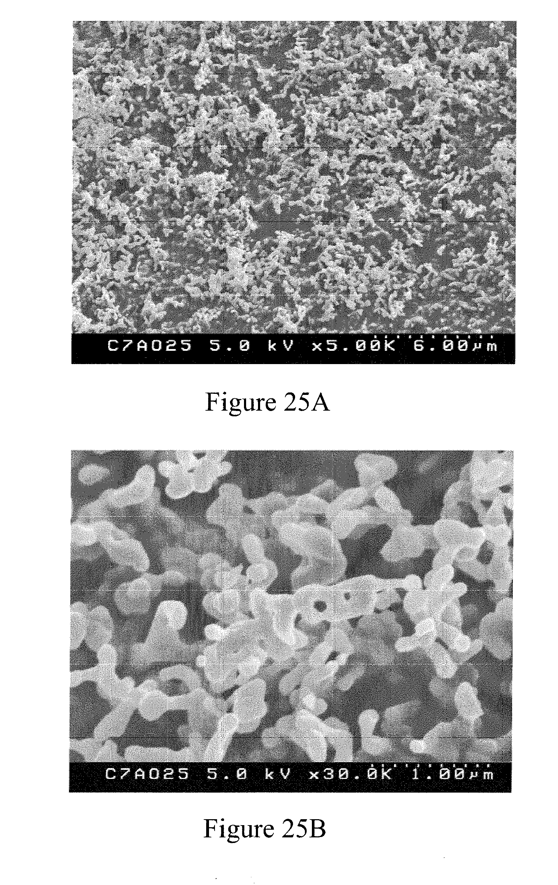

Hydrothermal synthesis of 9 lbs of 250 nm AA powder doped with 0.05 wt% of manganese was performed as follows. One titanium container (12"Dia x 11"H) was cleaned and filled with 5.0 L of DI water. Then, 51.1 g of 96.6% H₂SO₄ was added to yield 0.1 M concentration, and the content of the container was stirred with a spatula. Subsequently, 5.680 g of KMnO₄ was added and the content of the container was stirred in order to obtain homogeneous solution. Then, 13.5 lbs of aluminum tri-hydrate Precursor Type C was added to the container and stirred using drill motor stirrer to obtain uniform slurry. The container was then closed with a lid, placed in a special steel holder (1 containers per holder), and put into cleaned autoclave (13"Dia x 120"H). 2.8 L of DI water were placed in the bottom of the autoclave. Total water content in the autoclave, including water from precursor decomposition was 7.4 L, which is 2.8% of the entire autoclave volume. The autoclave was then sealed using modified Bridgman-type plug and covered with insulation. Calibrated pressure gauge and two J-type thermocouples were attached. Approximately 24 hours after loading the containers, the heating cycle of the autoclave was initiated as follows: from room temperature to 430°C with heating rate of 9.0°C/hr, followed by holding at 430°C for 8 days, with temperature stability of a few °C, with pressure not exceeding 1,200 psi. Neither pressure relief nor venting after the synthesis was performed. After unloading, the powders were inspected by XRD and SEM and it was found that they consisted of submicron, about 250 nm in diameter primary particles of AA. Morphology of the as-synthesized (unmilled) AA powder is shown in Figures 25A and 25B. After drying in an oven at about 400°C for 48 hours, approximately 9 lbs of as-synthesized submicron manganese-doped AA powder was retrieved. The powder was then wet milled in horizontal mill at rotation speed of 1,600 rpm for 430 min. The slurry contained 168 g of the as-synthesized manganese-doped AA powder, 312 g of DI water, and 0.75% ofpolyacrylate dispersant. The resulting slurry was a stable dispersion of Mn-doped AA in water. The particle size distribution analysis after milling gave the following powder characteristics: D₅₀ = 257 nm, D₁₀₀ = 900 nm.

With regard to examples 14-16, the instances of AA powders doped with manganese and chromium presented in Examples 9-11 serve only to demonstrate the idea and methodology of doping AA during hydrothermal synthesis. Other dopants, such as Mg, Si, Ca, Cs, Ti, Ba, B, etc could be applied using the same methodology as described in Examples 14-16. Powders with such dopants could be useful as AA supports for EO catalysts because the dopants could enhance sinterability of the AA powders. The idea of enhancing sinterability by using AA powders with dopants and with elevated levels of sintering-enhancing impurities is demonstrated in the following Example 17.

Example 17: Fabrication of porous AA supports from hydrothermally synthesized Na-, and Si-containing AA powders (undoped and Mn-doped).

The following hydrothermally-synthesized AA powders with various particle sizes, aggregation levels, and chemical compositions were used to prepare porous AA supports: 6 µm (as-synthesized, i.e. aggregated), 6 µm (milled), 10 µm (milled), 10 µm (Mn-doped, milled), and 25 µm (as-synthesized, i.e. aggregated). All of these powders were synthesized using procedures described earlier, for instance in Examples 14-15. Despite apparent differences, they shared one common feature, which is elevated level of sodium (about 500-600 ppm) and silicon (about 200-300 ppm), derived from the Precursor Type C precursor. Concentration of these impurities was thus significantly higher, particularly in the case of Si, than in the AA powders derived from Precursor Type A or Precursor Type B precursors (Na=20-140 ppm, Si<10 ppm), which were used in preparation of porous AA supports described in Example 9-13. The powders were compacted using either (i) filter pressing at 10 MPa pressure, or were uniaxially pressed in a die at (ii) 50 MPa and (iii) 200 MPa pressures. The green compacts were then placed in a laboratory furnace with MoSi₂ heating elements and sintered at 1,650°C (2 h) in air atmosphere (heating rate was 6°C/min, uncontrolled cooling with the furnace). No measurements of the crushing strength were performed, although the sintered AA porous supports exhibited sufficiently high mechanical strength for application in EO catalyst supports. Apparent densities, porosities and microstructures of all sintered AA porous bodies were analyzed using SEM and mercury intrusion porosimetry. Results of the analysis are summarized in Table VI and in Figures 13A-13D and 14A-14C. The median pore diameter in the sintered AA supports varied between 0.8 and 11 µm and total porosities varied between 10 and 56% (in most cases 20-40%). In all cases, single-modal particle size distributions were observed (Figures 13A-13D). Microstructures of the supports consisted of uniform AA primary particles clearly connected with necks during sintering (Figures 14A-14C). Due to all these features, these porous AA bodies could be used as AA supports in EO catalysis.

The present invention has some of the following aspects: process of making a crystalline powder. The process includes: providing at least a precursor material; hydrothermal synthesis to create a predetermined amount of boehmite as an intermediate product from the at least precursor material; hydrothermal synthesis to convert at least a portion of the boehmite to alpha alumina, wherein any remaining, un-converted boehmite is attached to alpha alumina. The step of hydrothermal synthesis to convert at least a portion of the boehmite to alpha alumina converts essentially all of the boehmite to alpha alumina. The step of hydrothermal synthesis to convert at least a portion of the boehmite to alpha alumina includes conversion to alpha alumina such that any remaining, un-converted boehmite is attached to an exterior surface of alpha alumina. The step of hydrothermal synthesis to create a predetermined amount of boehmite includes elevating to a first temperature of approximately 200°C and maintaining the first temperature for approximately one day, the step of hydrothermal synthesis to convert at least a portion of the boehmite to alpha alumina includes subsequently elevating to a second temperature within the range of approximately 380°C to approximately 435°C and maintaining the second temperature for approximately 3-10 days, and the process includes subsequently cooling from the second temperature. The steps of hydrothermal synthesis to create a predetermined amount of boehmite and hydrothermal synthesis to convert at least a portion of the boehmite to alpha alumina include elevating to a temperature greater than 430°C, maintaining the elevated temperature for approximately 4-10 days, and subsequently cooling from the elevated temperature. At least one of the steps of hydrothermal synthesis to create a predetermined amount of boehmite and hydrothermal synthesis to convert at least a portion of the boehmite to alpha alumina includes elevating to a first temperature for a period of time, the process includes venting of water at the end of the period of time of heating to remove the impurities.

Some additional aspects include that the step of providing at least a precursor material includes provision of H₂O₂ to remove organic moieties. The step of providing at least a precursor material includes providing the precursor to include at least one of: Al₂O₃, Na₂O, Fe₂O₃, and SiO₂. The step of providing precursor includes providing the precursor with approximately 65% Al₂O₃, approximately 0.1% to approximately 0.35% Na₂O, approximately 0.007% to approximately 0.01% Fe₂O₃, and approximately 0.001% to approximately 0.005% SiO₂. The step of providing precursor includes providing the precursor with approximately 0.009% to approximately 0.17% soluble Na₂O. The steps of hydrothermal synthesis to create a predetermined amount of boehmite and hydrothermal synthesis to convert at least a portion of the boehmite to alpha alumina include performing the steps within a titanium container.

Some additional aspects include that the step of hydrothermal synthesis to create a predetermined amount of boehmite includes creation of essentially pure boehmite. The step of hydrothermal synthesis to convert at least a portion of the boehmite to alpha alumina includes creation of essentially pure alpha alumina. The step of hydrothermal synthesis to convert at least a portion of the boehmite to alpha alumina includes creation of a mixture of approximately 100% alpha alumina and 0% boehmite. The step of hydrothermal synthesis to convert at least a portion of the boehmite to alpha alumina includes creation of a mixture of approximately 99% alpha alumina and 1% boehmite. The step of hydrothermal synthesis to convert at least a portion of the boehmite to alpha alumina includes creation of a mixture of approximately 95% alpha alumina and 5% boehmite. The step ofhydrothermal synthesis to convert at least a portion of the boehmite to alpha alumina includes creation of a mixture of approximately 90% alpha alumina and 10% boehmite. The step of hydrothermal synthesis to convert at least a portion of the boehmite to alpha alumina includes creation of a mixture of approximately 80% alpha alumina and 20% boehmite.

Some additional aspects include that step of providing at least a precursor material includes providing seeds, the step of hydrothermal synthesis to convert at least a portion of the boehmite to alpha alumina includes creation of particles of alpha alumina, the step of providing seeds includes providing seeds of predetermined size to yield particles of alpha alumina of predetermined size. The step of providing seeds of predetermined size to yield particles of alpha alumina of predetermined size includes providing seeds to yield particles of alpha alumina in the range of 1-40 µm. The step of hydrothermal synthesis to convert at least a portion of the boehmite to alpha alumina includes creation of particles of alpha alumina, the step of providing at least a precursor material includes providing acidic media to control particle size of the alpha alumina. The step of providing acidic media includes providing sulfuric acid. The step of hydrothermal synthesis to convert at least a portion of the boehmite to alpha alumina includes creation of particles of alpha alumina, the step of providing at least a precursor material includes providing acidic aluminum salts to control particle size of the alpha alumina. The step of providing acidic aluminum salts to control particle size of the alpha alumina includes controlling particle size to be less than 100 nm in diameter.

Some additional aspects include provision of a crystalline powder made by a process of making a crystalline powder. The process includes: providing at least a precursor material; hydrothermal synthesis to create a predetermined amount of boehmite as an intermediate product from the at least precursor material; hydrothermal synthesis to convert at least a portion of the boehmite to alpha alumina, wherein any remaining, un-converted boehmite is attached to alpha alumina. The crystalline powder including at least one of the following: an oxide or a salt of an alkaline metal, Ti, Zr, Si, Mg or Ca.

Some additional aspects include provision of an extrudate made with the crystalline powder made by a process that includes: providing at least a precursor material; hydrothermal synthesis to create a predetermined amount of boehmite as a intermediate product from the at least precursor material; hydrothermal synthesis to convert at least a portion of the boehmite to alpha alumina, wherein any remaining, un-converted boehmite is attached to alpha alumina. The extrudate includes at least one salt from the group of carbonate, hydroxide, aluminate and sulfate salts. The extrudate is made with at least two crystalline powders, each of the two powders has a different particle. The particle size of one powder is approximately 3 µm in diameter and the particle size of one powder is approximately 10 µm. The extrudate includes separate boehmite particles. The separate boehmite particles have a diameter size in the nano-size range. The extrudate includes at least one oxide binder from the group of TiO₂, ZrO₂, SiO₂, Mg Silicate and CaSilicate. The extrudate does not include a binder. The extrudate is an ethylene oxide catalyst support.

Some additional aspects include a process of making an extrudate that includes: providing at least a precursor material; hydrothermal synthesis to create a predetermined amount of boehmite as a intermediate product from the at least precursor material; hydrothermal synthesis to convert at least a portion of the boehmite to alpha alumina, wherein any remaining, un-converted boehmite is attached to alpha alumina. The extrudate is heated in air at a temperature within the range of 900 to 1600°C. The extrudate is for ethylene oxide catalyst support. The extrudate is made without separate, unattached boehmite. The extrudate is made to include micropores upon the extrudate. The extrudate is made with alpha alumina being at least 90 weight percent of the total weight. The extrudate is made with alpha alumina being at least 95 weight percent of the total weight. The extrudate is made with alpha alumina being at least 99 weight percent of the total weight. The extrudate is made with alpha alumina being at or nearly 100 weight percent of the total weight.

Some additional aspects include a process wherein the steps of hydrothermal synthesis to create a predetermined amount of boehmite and hydrothermal synthesis to convert at least a portion of the boehmite to alpha alumina are performed within an autoclave having liners, a pressure relief system and a heat exchanger. The liners include titanium. The liners include at least two double layers and one top screen. The step of providing at least a precursor material includes providing H2O2 in order to perform at least one of the following: decompose organic moieties and create defect sites. The step of providing at least a precursor material includes providing dopants in order t to perform at least one of the following: enhance sinterability and create defect sites.

Some additional aspects include a composition including alpha alumina crystals with surface adhesions of boehmite. The composition is approximately 99% alpha alumina and 1% boehmite. The composition is approximately 95% alpha alumina and 5% boehmite. The composition is approximately 90% alpha alumina and 10% boehmite. The composition is approximately 80% alpha alumina and 20% boehmite. The composition has a particle size of less than 100 nm in diameter. The composition is included in an extrudate.

Some additional aspects include an extrudate including alpha alumina crystals with surface adhesions of boehmite. The extrudate includes at least one salt of: carbonate, hydroxide, aluminate and sulfate. The extrudate includes at least two different alumina crystals with different size crystal particles. One particle size is approximately 3 µm and another particle size is approximately 10 µm. The extrudate includes separate boehmite particles. The extrudate includes at least one of TiO₂, ZrO₂, SiO₂, Mg Silicate and CaSilicate. The extrudate has a uniform pore size. The apparatus including an autoclave with titanium liners, a pressure relief system and a heat exchanger. The titanium liners include a double bottom and a top screen.

The invention has been described with reference to the example embodiments described above. Modifications and alterations will occur to others upon a reading and understanding of this specification. Examples embodiments incorporating one or more aspects of the invention are intended to include all such modifications and alterations insofar as they come within the scope of the appended claims.

## Claims

1. A process of making a crystalline powder, the process including:
providing at least a precursor material;
hydrothermal synthesis to create a predetermined amount of boehmite as a intermediate product from the at least precursor material;
hydrothermal synthesis to convert at least a portion of the boehmite to alpha alumina, wherein any remaining, un-converted boehmite is attached to alpha alumina.

2. A process as set forth in claim 1, wherein the step of hydrothermal synthesis to convert at least a portion of the boehmite to alpha alumina converts essentially all of the boehmite to alpha alumina.

3. A process as set forth in claim 1, wherein the step of hydrothermal synthesis to convert at least a portion of the boehmite to alpha alumina includes conversion to alpha alumina such that any remaining, un-converted boehmite is attached to an exterior surface of alpha alumina.

4. A process as set forth in claim 1, wherein the step of hydrothermal synthesis to create a predetermined amount of boehmite includes elevating to a first temperature of approximately 200°C and maintaining the first temperature for approximately one day, the step of hydrothermal synthesis to convert at least a portion of the boehmite to alpha alumina includes subsequently elevating to a second temperature within the range of approximately 380°C to approximately 435°C and maintaining the second temperature for approximately 2-10 days, and the process includes subsequently cooling from the second temperature.

5. A process as set forth in claim 1, wherein the steps of hydrothermal synthesis to create a predetermined amount of boehmite and hydrothermal synthesis to convert at least a portion of the boehmite to alpha alumina include elevating to a temperature greater than 430°C, maintaining the elevated temperature for approximately 4-10 days, and subsequently cooling from the elevated temperature.

6. A process as set forth in claim 1, wherein at least one of the steps of hydrothermal synthesis to create a predetermined amount of boehmite and hydrothermal synthesis to convert at least a portion of the boehmite to alpha alumina includes elevating to a first temperature for a period of time, the process includes venting of water at the end of the period of time of heating to remove the impurities.

7. A process as set forth in claim 1, wherein the step of providing at least a precursor material includes provision of H₂O₂.

8. A process as set forth in claim 1, wherein the step of providing at least a precursor material includes providing the precursor to include at least one of: aluminum hydroxide, aluminum tri-hydroxide, aluminum oxide-hydroxide, Al₂O₃.

9. A process as set forth in claim 8, wherein the step of providing precursor includes providing the aluminum hydroxide precursor with approximately 0.1% to approximately 0.35% Na₂O, approximately 0.007% to approximately 0.01% Fe₂O₃, and approximately 0.001% to approximately 0.005% SiO₂.

10. A process as set forth in claim 9, wherein the step of providing precursor includes providing the precursor with approximately 0.009% to approximately 0.17% soluble Na₂O.

11. A process as set forth in claim 1, wherein the steps of hydrothermal synthesis to create a predetermined amount of boehmite and hydrothermal synthesis to convert at least a portion of the boehmite to alpha alumina include performing the steps within a titanium container.

12. A process as set forth in claim 1, wherein the step of hydrothermal synthesis to create a predetermined amount of boehmite includes creation of essentially pure boehmite.

13. A process as set forth in claim 1, wherein the step of hydrothermal synthesis to convert at least a portion of the boehmite to alpha alumina includes creation of essentially pure alpha alumina.

14. A process as set forth in claim 1, wherein the step of hydrothermal synthesis to convert at least a portion of the boehmite to alpha alumina includes creation of a mixture of approximately 99% alpha alumina and 1% boehmite.

15. A process as set forth in claim 1, wherein the step of hydrothermal synthesis to convert at least a portion of the boehmite to alpha alumina includes creation of a mixture of approximately 95% alpha alumina and 5% boehmite.

16. A process as set forth in claim 1, wherein the step of hydrothermal synthesis to convert at least a portion of the boehmite to alpha alumina includes creation of a mixture of approximately 90% alpha alumina and 10% boehmite.

17. A process as set forth in claim 1, wherein the step of hydrothermal synthesis to convert at least a portion of the boehmite to alpha alumina includes creation of a mixture of approximately 80% alpha alumina and 20% boehmite.

18. A process as set forth in claim 1, wherein step of providing at least a precursor material includes providing seeds, the step of hydrothermal synthesis to convert at least a portion of the boehmite to alpha alumina includes creation of particles of alpha alumina, the step of providing seeds includes providing seeds of predetermined size to yield particles of alpha alumina of predetermined size.

19. A process as set forth in claim 18 wherein step of providing seeds of predetermined size to yield particles of alpha alumina of predetermined size includes providing seeds to yield particles of alpha alumina in the range of 50 nm-100 µm.

20. A process as set forth in claim 18 wherein step of providing seeds of predetermined size to yield particles of alpha alumina of predetermined size includes providing seeds to yield particles of alpha alumina in the range of 1 - 40 µm.

21. A process as set forth in claim 1, wherein the step of hydrothermal synthesis to convert at least a portion of the boehmite to alpha alumina includes creation of particles of alpha alumina, the step of providing at least a precursor material includes providing acidic media to control particle size of the alpha alumina.

22. A process as set forth in claim 21, wherein step of providing acidic media includes providing sulfuric acid.

23. A process as set forth in claim 1, wherein the step of hydrothermal synthesis to convert at least a portion of the boehmite to alpha alumina includes creation of particles of alpha alumina, the step of providing at least a precursor material includes providing acidic aluminum salts to control particle size of the alpha alumina.

24. A process as set forth in claim 1, wherein the step of providing acidic aluminum salts to control particle size of the alpha alumina includes controlling particle size to be less than 100 nm in diameter.

25. A crystalline powder made by the process of claim 1.

26. A crystalline powder made by the process of claim 25 further including at least one of the following: an oxide or a salt of an alkaline metal, Ti, Zr, Si, Mg or Ca.

27. An extrudate made with the crystalline powder of claim 25.

28. An extrudate as set forth in claim 27, wherein the extrudate includes at least one salt from the group of carbonate, hydroxide, aluminate and sulfate salts.

29. An extrudate as set forth in claim 28, wherein the extrudate is made with at least two crystalline powder of claim 25, each of the two powders has a different particle size.

30. An extrudate as set forth in claim 29, wherein the particle size of one powder is approximately 3 µm in diameter and the particle size of one powder is approximately 10 µm.

31. An extrudate as set forth in claim 27, wherein the extrudate includes separate boehmite particles.

32. An extrudate as set forth in claim 27, wherein the separate boehmite particles have a diameter size in the nano-size range.

33. An extrudate as set forth in claim 27, wherein the extrudate includes at least one oxide binder from the group of TiO₂, ZrO₂, SiO₂, Mg-Silicate and Ca-Silicate.

34. An extrudate as set forth in claim 27, wherein the extrudate does not include a binder.

35. An extrudate as set forth in claim 27, wherein the extrudate is a catalyst support.

36. A process of making an extrudate that includes the process of claim 1.

37. A process as set forth in claim 36, wherein the extrudate is heated at a temperature within the range of 900 to 1600°C in order to produce alpha alumina-containing catalyst support.

38. A process as set forth in claim 37, wherein the support is for ethylene oxide catalyst support.

39. A process as set forth in claim 36, wherein the extrudate is made without separate, unattached boehmite.

40. A process as set forth in claim 36, wherein the extrudate has low or no micropores upon the support.

41. A process as set forth in claim 36, wherein the extrudate is made to include micropores upon the support.

42. A process as set forth in claim 36, wherein the extrudate is made with alpha alumina being at least 50 weight percent of the total weight.

43. A process as set forth in claim 36, wherein the extrudate is made with alpha alumina being at least 60 weight percent of the total weight.

44. A process as set forth in claim 36, wherein the extrudate is made with alpha alumina being at least 70 weight percent of the total weight.

45. A process as set forth in claim 36, wherein the extrudate is made with alpha alumina being at least 80 weight percent of the total weight.

46. A process as set forth in claim 36, wherein the extrudate is made with alpha alumina being at least 90 weight percent of the total weight.

47. A process as set forth in claim 36, wherein the extrudate is made with alpha alumina being at least 95 weight percent of the total weight.

48. A process as set forth in claim 36, wherein the extrudate is made with alpha alumina being at least 99 weight percent of the total weight.

49. A process as set forth in claim 36, wherein the extrudate is made with alpha alumina being at or nearly 100 weight percent of the total weight.

50. A process as set forth in claim 1, wherein the steps of hydrothermal synthesis to create a predetermined amount of boehmite and hydrothermal synthesis to convert at least a portion of the boehmite to alpha alumina are performed within an autoclave having liners, a pressure relief system and a heat exchanger.

51. A process as set forth in claim 50, wherein the liners include titanium.

52. A process as set forth in claim 50, wherein the liners include at least two double layers and one top screen.

53. A process as set forth in claim 1, wherein the step of providing at least a precursor material includes providing H2O2.

54. A process as set forth in claim 1, wherein the step of providing at least a precursor material includes providing dopants.

55. A process as set forth in claim 1, wherein the dopants include at least one selected from the group of transition metal elements.

56. A composition including alpha alumina crystals with surface adhesions ofboehmite.

57. A composition set forth in claim 56, wherein the composition is approximately 99% alpha alumina and 1 % boehmite.

58. A composition set forth in claim 56, wherein the composition is approximately 95% alpha alumina and 5% boehmite.

59. A composition set forth in claim 56, wherein the composition is approximately 90% alpha alumina and 10% boehmite.

60. A composition set forth in claim 56, wherein the composition is approximately 80% alpha alumina and 20% boehmite.

61. A composition set forth in claim 56, wherein the composition is approximately 70% alpha alumina and 30% boehmite.

62. A composition set forth in claim 56, wherein the composition is approximately 50% alpha alumina and 50% boehmite.

63. A composition set forth in claim 56, wherein the composition is approximately 40% alpha alumina and 60% boehmite.

64. A composition set forth in claim 56, wherein the composition is approximately 20% alpha alumina and 80% boehmite.

65. A composition set forth in claim 56, wherein the composition is approximately 10% alpha alumina and 90% boehmite.

66. A composition set forth in claim 56, wherein the composition has a particle size of less than 100 nm in diameter.

67. A composition set forth in claim 56, wherein composition is included in an extrudate.

68. An extrudate including alpha alumina crystals with surface adhesions of boehmite.

69. An extrudate as set forth in claim 68, wherein the extrudate includes at least one salt of: carbonate, hydroxide, aluminate and sulfate.

70. An extrudate as set forth in claim 68, wherein the extrudate includes at least two different alumina crystals with different size crystal particles.

71. An extrudate as set forth in claim 70, wherein one particle size is approximately 3 µm and another particle size is approximately 10 µm.

72. An extrudate as set forth in claim 68, wherein the extrudate includes separate boehmite particles.

73. An extrudate as set forth in claim 68, wherein the extrudate includes at least one of TiO₂, ZrO₂, SiO₂, Mg-Silicate and Ca-Silicate.

74. An apparatus for hydrothermal synthesis of high purity alpha alumina powder, the apparatus including an autoclave with titanium liners, a pressure relief system and a heat exchanger.

75. An apparatus as set forth in claim 74, wherein the titanium liners include a double bottom and a top screen.
